(19) Europäisches Patentamt
European Patent Office
Office européen des brevets

(11) EP 2 592 050 B1

(12) **EUROPEAN PATENT SPECIFICATION**

(45) Date of publication and mention of the grant of the patent:
**14.05.2014 Bulletin 2014/20**

(51) Int Cl.:
***C01G 23/00*** (2006.01) ***C04B 35/46*** (2006.01)
***H01M 4/485*** (2010.01) ***H01M 4/36*** (2006.01)

(21) Application number: **12177136.4**

(22) Date of filing: **19.07.2012**

(54) **Composite, method of manufacturing the composite, negative electrode active material including the composite, negative electrode including the negative electrode active material, and lithium secondary battery including the same**

Verbundstoff, Verfahren zur Herstellung des Verbundstoffes, Negativelektrodenaktivmaterial mit dem Verbundstoff, Negativelektrode mit dem Negativelektrodenaktivmaterial und Lithiumsekundärbatterie damit

Composite, procédé de fabrication de ce composite, matériau actif d’électrode négative comprenant le composite, électrode négative comprenant le matériau actif d’électrode négative et batterie secondaire au lithium le comprenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2011 KR 20110117778**

(43) Date of publication of application:
**15.05.2013 Bulletin 2013/20**

(73) Proprietor: **Samsung SDI Co., Ltd.**
**Gyeonggi-do (KR)**

(72) Inventors:
- **SONG, Min-sang**
  **449-712 Gyeonggi-do (KR)**
- **KIM, Ryoung-hee**
  **449-712 Gyeonggi-do (KR)**
- **CHOI, Jae-man**
  **449-712 Gyeonggi-do (KR)**
- **CHOI, Young-min**
  **449-712 Gyeonggi-do (KR)**
- **CHOI, Won-chang**
  **449-712 Gyeonggi-do (KR)**
- **PARK, Kyu-sung**
  **449-712 Gyeonggi-do (KR)**
- **KIM, Gue-sung**
  **449-712 Gyeonggi-do (KR)**
- **KIM, So-yeon**
  **449-712 Gyeonggi-do (KR)**

(74) Representative: **Zijlstra, Robert Wiebo Johan**
**Elkington and Fife LLP**
**Prospect House**
**8 Pembroke Road**
**Sevenoaks, Kent TN13 1XR (GB)**

(56) References cited:
**EP-A1- 2 357 691**
**WO-A1-2008/111465**
**WO-A2-2006/131873**
**JP-A- 2008 117 625**
**JP-A- 2012 051 740**
**US-A1- 2010 015 509**
**US-A1- 2010 068 625**
**US-A1- 2011 274 962**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 592 050 B1

## Description

### BACKGROUND OF THE INVENTION

Embodiments relate to a composite, method of manufacturing the composite, negative electrode active material including the composite, negative electrode including the negative electrode active material, and lithium secondary battery including the same according to the appended claims.

A lithium secondary battery, which may be used as a power supply for small mobile electronic devices, is a battery that exhibits a high energy density by using an organic electrolytic solution to have a discharge voltage that is two or more times higher than a discharge voltage in a battery using an alkaline aqueous solution.

Lithium secondary batteries, which use materials capable of intercalating and deintercalating ions as negative and positive electrodes, are manufactured by providing an organic electrolytic solution or a polymer electrolytic solution between the positive and negative electrodes. Lithium secondary batteries generate electrical energy by an oxidation/reduction reaction during the intercalation/deintercalation of lithium ions at the positive and negative electrodes.

### SUMMARY OF THE INVENTION

Embodiments are directed to a composite, method of manufacturing the composite, negative electrode active material including the composite, negative electrode including the negative electrode active material, and lithium secondary battery including the same.

The embodiments may be realized by providing a composite including a lithium titanium oxide, and a bronze phase titanium oxide. The lithium titanium oxide is represented by the following Formula 1:

[Formula 1] $Li_{4+a}Ti_{5-b}M_cO_{12-d}$

wherein $-0.2 \leq a \leq 0.2$, $-0.3 \leq b \leq 0.3$, $0 \leq c \leq 0.3$, and $-0.3 \leq d \leq 0.3$, and M is a metal selected from Groups 1 to 6 and Groups 8 to 15. M may be a metal selected from the group of lithium (Li), sodium (Na), magnesium (Mg), aluminum (Al), calcium (Ca), strontium (Sr), chromium (Cr), vanadium (V), iron (Fe), cobalt (Co), nickel (Ni), zirconium (Zr), zinc (Zn), silicon (Si), yttrium (Y), niobium (Nb), gallium (Ga), tin (Sn), molybdenum (Mo), tungsten (W), barium (Ba), lanthanum (La), cerium (Ce), silver (Ag), tantalum (Ta), hafnium (Hf), ruthenium (Ru), bismuth (Bi), antimony (Sb), and arsenic (As).

The bronze phase titanium oxide is represented by the following Formula 2:

[Formula 2] $Ti_{1+x}O_{2+y}$

wherein $-0.2 \leq x \leq 0.2$ and $-0.2 \leq y \leq 0.2$.

An atomic ratio of lithium to titanium in the composite may be about 0.6 to about 1.8.

The lithium titanium oxide is included in the composite in an amount of about 0.01 moles to about 99 moles, based on 1 mole of the bronze phase titanium oxide.

The lithium titanium oxide may be included in an amount of about 0.01 moles to about 10.0 moles, based on 1 mole of the bronze phase titanium oxide.

The lithium titanium oxide may be $Li_4Ti_5O_{12}$.

The bronze phase titanium oxide may be $TiO_2$.

The bronze phase titanium oxide may have a shape selected from the group of nanowires, rods, and particles.

An average particle diameter of the lithium titanium oxide may be about 0.1 μm to about 30 μm, and an average particle diameter of the bronze phase titanium oxide may be about 0.01 μm to about 5 μm.

A ratio of an intensity of a main peak of the bronze phase titanium oxide ($TiO_2$-B) to an intensity of a main peak of the lithium titanium oxide may be about 0.03 to about 2 in an X-ray diffraction spectrum of the composite.

The embodiments may also be realized by providing a method of manufacturing a composite including a lithium titanium oxide and a bronze phase titanium oxide, the method including providing a lithium titanium oxide; providing a bronze phase titanium oxide; mixing the lithium titanium oxide and the bronze phase titanium oxide; and subjecting the mixture to a heat treatment.

The heat treatment may be performed at about 250 °C to about 450 °C.

The heat treatment may be performed under an inert gas atmosphere or an oxidizing gas atmosphere.

The lithium titanium oxide is included in the composite in an amount of about 0.01 mole to about 99 moles, based on 1 mole of the bronze phase titanium oxide.

Providing the bronze phase titanium oxide may include performing a hydrogen ion substitution reaction on sodium titanate to obtain hydrogen titanate; and subjecting the hydrogen titanate to heat treatment under an air atmosphere or an oxygen atmosphere.

The embodiments may also be realized by providing a negative electrode active material comprising the composite according to an embodiment.

The embodiments may also be realized by providing a negative electrode comprising the negative electrode active material according to an embodiment.

The embodiments may also be realized by providing a lithium secondary battery comprising the negative electrode according to an embodiment.

BRIEF DESCRIPTION OF THE DRAWINGS

Features will become apparent to those of ordinary skill in the art by describing in detail exemplary embodiments with reference to the attached drawings in which:

FIGS. 1A and 1B illustrate graphs showing charge and discharge characteristics of a lithium secondary battery including a lithium titanium oxide as an electrode active material;
FIG. 1C illustrates a schematic view of a structure of a lithium secondary battery according to an embodiment;
FIG. 1D illustrates a graph showing X-ray diffraction spectra of an anatase phase titanium oxide and a bronze phase titanium oxide;
FIGS. 2 and 3 illustrate scanning electron microscopic images of a lithium titanium oxide prepared according to Preparative Example 1;
FIGS. 4 and 5 illustrate scanning electron microscopic images of bronze phase $TiO_2$ nanowires prepared according to Preparative Example 2;
FIGS. 6 and 7 illustrate scanning electron microscopic images of a composite prepared according to Example 1;
FIG. 8 illustrates a graph showing charge and discharge characteristics of coin half cells manufactured according to Examples of Manufacture 1, 3, and 5 and Comparative Example of Manufacture 1;
FIG. 9A illustrates a graph showing charge and discharge characteristics of coin half cells manufactured according to Examples of Manufacture 2, 4, and 6 and Comparative Example of Manufacture 2;
FIG. 9B illustrates a graph showing charge and discharge characteristics of coin half cells manufactured according to Examples of Manufacture 9 and 10 and Comparative Example of Manufacture 3;
FIG. 10 illustrates a graph showing lifetime of cells according to Examples of Manufacture 1, 3, and 5;
FIG. 11 illustrates a graph showing lifetime characteristics of coin half cells according to Examples of Manufacture 4, 6, and 8 and Comparative Example of Manufacture 2; and
FIG. 12 illustrates a graph showing lifetime characteristics of coin half cells according to Examples of Manufacture 9 and 10 and Comparative Example of Manufacture 3.

DETAILED DESCRIPTION OF THE EMBODIMENTS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope thereof to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

Hereinafter, exemplary embodiments of a composite, a manufacturing method thereof, a negative electrode active material including the same, a negative electrode including the same, and a lithium secondary battery employing the same will be described in more detail.

A composite according to an embodiment includes a lithium titanium oxide (LTO) and a bronze phase titanium oxide.
The LTO is a compound represented by the following Formula 1.

[Formula 1] $$Li_{4+a}Ti_{5-b}M_cO_{12-d}$$

In Formula 1, a, b, c, and d satisfy the following relations: $-0.2 \leq a \leq 0.2$, $-0.3 \leq b \leq 0.3$, $0 \leq c \leq 0.3$, and $-0.3 \leq d \leq 0.3$.

M may include a metal selected from Groups 1 to 6 and Groups 12 to 15 metals.

In an implementation, M may include one selected from the group of lithium (Li), sodium (Na), magnesium (Mg), aluminum (Al), calcium (Ca), strontium (Sr), chromium (Cr), vanadium (V), iron (Fe), cobalt (Co), nickel (Ni), zirconium (Zr), zinc (Zn), silicon (Si), yttrium (Y), niobium (Nb), gallium (Ga), tin (Sn), molybdenum (Mo), tungsten (W), barium (Ba), lanthanum (La), cerium (Ce), silver (Ag), tantalum (Ta), hafnium (Hf), ruthenium (Ru), bismuth (Bi), antimony (Sb), and arsenic (As).

The compound represented by Formula 1 may have a spinel-type structure. In an implementation, the compound represented by Formula 1 may be, e.g., $Li_4Ti_5O_{12}$.

The bronze phase titanium oxide is a compound represented by the following Formula 2.

[Formula 2] $Ti_{1+x}O_{2+y}$

In Formula 2, x and y satisfy the following relations: $-0.2 \leq x \leq 0.2$ and $-0.2 \leq y \leq 0.2$.

In an implementation, the bronze phase titanium oxide represented by Formula 2 may be, e.g., $TiO_2$.

The composite may be a material in which the LTO and the bronze phase titanium oxide are complexed.

When an electrode is formed by using LTO (e.g., $Li_4Ti_5O_{12}$) as an electrode active material without a conductive agent, the same charge and discharge characteristics may be shown as when an electrode is formed by using a conductive agent. This fact may be observed through the following test, and it may be understood from this result that LTO is a material that exhibits characteristics of an active material and a conductive agent at the same time. The LTO is inherently an insulator, and thus, it may not be generally known that this LTO may also serve as a conductive agent.

Test

$Li_4Ti_5O_{12}$ (as an active material) and polyvinylidene fluoride (as a binder) were mixed, followed by mechanical stirring to prepare a slurry A. In the slurry A, $Li_4Ti_5O_{12}$ as an active material and polyvinylidene fluoride as a binder were mixed in a weight ratio of about 98:2.

$Li_4Ti_5O_{12}$ (as an active material) and carbon black (as a conductive agent) were mixed, a binder solution (in which polyvinylidene fluoride was dissolved in N-methylpyrrolidone (NMP)) was added thereto, followed by mechanical stirring to prepare a slurry B. In slurry B, $Li_4Ti_5O_{12}$ as the active material, carbon black as the conductive agent, and polyvinylidene fluoride as the binder were mixed in a weight ratio of about 90:5:5. For example, slurry B included the conductive agent, which was absent in slurry A.

Slurry A and slurry B were applied on respective aluminum foils to a thickness of about 90 $\mu$m, followed by vacuum drying at about 120 °C to manufacture electrode A and electrode B, respectively.

Then, electrode A and electrode B were respectively punched into a disk shape having a diameter of about 12 mm, and then lithium metal was used as a counter electrode to manufacture a 2032 type coin half cell. A 1.3 M $LiPF_6$ solution (in a solvent in which ethylene carbonate, diethyl carbonate, and methyl ethyl carbonate were mixed in a volume ratio of about 3:5:2) was used as an electrolytic solution.

Charge and discharge characteristics of the coin half cells obtained according to the procedure were measured, and the results are shown in FIGS. 1A and 1B.

In FIGS. 1A and 1B, A represents the battery prepared using slurry A, and B represents the battery prepared using the slurry B.

As shown in FIGS. 1A and 1B, it may be seen that the electrode formed using carbon black as a conductive agent (electrode B) exhibited charge and discharge characteristics that were almost identical to those of the electrode formed without using carbon black as a conductive agent (electrode A).

As described above, LTO is a material that simultaneously exhibits characteristics of an active material and a conductive agent, which may implement charge and discharge characteristics identical to those when a conductive agent is used, without using a conductive agent.

These characteristics may be as follows.

$Li_4Ti_5O_{12}$ (as an LTO) may act as an insulator before charge and discharge is performed. However, when lithium is intercalated, a two-phase equilibrium state ($Li_4Ti_5O_{12} \leftrightarrow Li_7Ti_5O_{12}$) may be reached to thereby cause a constant intercalation/deintercalation potential, compared to an intercalation/deintercalation potential, and thus, sufficient electron conductivity may be obtained as the charge and discharge proceeds. In addition, the lithium intercalation/deintercalation potential of a $Li_4Ti_5O_{12}$/ $Li_7Ti_5O_{12}$ pair of the LTO is about 1.5 V. At the potential, undesirable formation of a dendrite may be avoided. Furthermore, $Li_4Ti_5O_{12}$ exhibits high chemical and thermal stability, is non-toxic, and is highly efficient in electrochemical properties. The LTO may allow for a charge and discharge voltage of about 1.5 V and may exhibit excellent stability, compared to, e.g., graphite-based materials. LTO may exhibit almost no change in lattice constant during lithium absorption and release and may exhibit excellent reversibility and lifetime characteristics.

The bronze phase titanium oxide is a metastable monoclinic material, may allow for a charge and discharge voltage of about 1.6 V (unlike anatase titanium oxide and rutile titanium oxide), and may exhibit, e.g., a high capacity of about 250 mAh/g and a high density of about 3.73 g/cc.

When a bronze phase titanium oxide having the above-mentioned characteristics is used as an electrode active material, capacity properties of the electrode are excellent, but lifetime characteristics may be degraded due to low conductivity and a slow kinetic property.

In order to improve conductivity and kinetic properties of the bronze phase titanium oxide, a method of increasing a content of a conductive agent has been considered. For example, the conductivity of an electrode using a bronze phase titanium oxide as an electrode active material may be improved to thereby improve the lifetime characteristics of a battery. However, the relative content of the bronze phase titanium oxide as an active material in the electrode may be decreased, and thus the energy density of the electrode may likewise be decreased.

According to an embodiment, a mixture of LTO (which may simultaneously serve as the active material and conductive agent) with a bronze phase titanium oxide may be compounded to form a composite including the LTO and the bronze phase titanium oxide. In the composite, the LTO (which exhibits excellent lifetime characteristics and high rate characteristics) may serve as an active material and a conductive agent to help improve the conductivity of the bronze phase titanium oxide, thereby improving lifetime characteristics of the bronze phase titanium oxide. At the same time, the bronze phase titanium oxide may help improve capacity without distorting a charge and discharge curve of the LTO.

As described above, due to compounding of the LTO and the bronze phase titanium oxide, the composite may help improve lifetime characteristics of the bronze phase titanium oxide (which exhibits excellent capacity properties) while also helping to improve capacity properties of the LTO (which exhibits excellent lifetime and high rate characteristics). As a result, the composite may exhibit excellent capacity properties of the active material per weight, and a negative electrode using the same may exhibit excellent combined density as well as discharge capacity and energy density per electrode volume. A lithium secondary battery including such an electrode may exhibit excellent capacity properties as well as in high rate discharge and lifetime characteristics.

In the composite, a content of the LTO is about 0.01 moles to about 99 moles, e.g., about 0.01 moles to about 10.0 moles, based on 1 mole of the bronze phase titanium oxide. In an implementation, the content of the LTO may be about 0.01 moles to about 2.0 moles, e.g., about 0.03 moles to about 2.0 moles or about 0.261 moles to about 1.566 moles, based on 1 mole of the bronze phase titanium oxide. In an implementation, the content of the LTO may be, e.g., about 0.261 moles, about 0.406 moles, about 0.696 moles, or 1.566 moles, based on 1 mole of the bronze phase titanium oxide.

In the composite, a mixing ratio of the LTO and the bronze phase titanium oxide may be expressed as weight ratio. The mixing weight ratio of the LTO and the bronze phase titanium oxide may be about 1:99 to about 99:1, e.g., about 1:9 to about 9:1. In an implementation, the mixing weight ratio of the LTO and the bronze phase titanium oxide may be about 6:4, about 7:3, about 8:2, or about 9:1.

Maintaining the amount of the LTO at about 0.01 to about 99 moles may help ensure that capacity properties of the composite are excellent, and that high rate characteristics thereof, e.g., high rate discharge characteristics and lifetime characteristics are excellent.

An atomic ratio of lithium based on titanium (x/y)(where, x represents an atomic percent of Li and y represents an atomic percent of Ti) in the composite may be about 0.6 to about 1.8, e.g., about 0.7 to about 1.4. For example, an atomic ratio of Li:Ti in the composite may be about 0.6:1 to about 1.8:1. In an implementation, the atomic ratio of Li:Ti in the composite may be about 0.7:1 to about 1.4:1. In an implementation, the atomic ratio may be determined according to an inductively coupled plasma (ICP) analysis.

A composition of the composite may be determined through an X-ray diffraction analysis using a CuK-alpha characteristic X-ray (wavelength: about 1.541 A).

According to the X-ray diffraction analysis, a LTO-related main peak of the composite may appear at $2\theta$ = about 17° to about 19°, e.g., at about 18° to about 19°. Other LTO-related peaks may be observed in a range of about 35 to about 36.5° and about 42° to about 44°.

A bronze phase titanium oxide-related main peak may appear at $2\theta$ = about 23° to about 27°. Other bronze phase titanium oxide-related peaks may be observed in a range of about 42° to about 46° and about 47° to about 49°.

An intensity ratio, e.g., a ratio of an intensity of the main peak ($2\theta$ = about 23° to about 27°) of the bronze phase titanium oxide ($TiO_2$-B) to an intensity of the main peak ($2\theta$ = about 17° to about 19°) of the LTO, may be about 0.03 to about 2, e.g., about 0.03 to about 1 or about 0.037 to about 0.097. The intensity of a peak may represent an intensity when intensities at starting and end points of the peak are set to be almost zero by removing the background.

The bronze phase titanium oxide may be in the form of, e.g., nanowires, rods, and/or particles. For example, the bronze phase titanium oxide may be in the form of, e.g., nanowires, nanorods, and/or nanoparticles. The composite may also be in the form of nanowires, rods, and/or particles, like the bronze phase titanium oxide. For example, the composite may be in the form of, e.g., nanowires, nanorods, and/or nanoparticles.

Hereinafter, a method for manufacturing a composite, according to an embodiment, will be described.

First, an LTO and a bronze phase titanium oxide may be mixed to obtain a mixture. The mixing may be performed by using, e.g., a ball mill, a Banbury mixer, a homogenizer, or the like.

The mixing may be performed for a variable time period, e.g., about 20 min to about 10 hr or about 30 min to about 3 hr. As the mixing is performed, an alcohol solvent, e.g., ethanol, may be added thereto to help increase mixing efficiency.

The mixture may be subjected to heat treatment to obtain a composite. The heat treatment may be performed under an inert gas atmosphere or under an oxidizing gas atmosphere.

The heat treatment, e.g., under the oxidizing gas atmosphere, may help prevent reduction of the composite.

The heat treatment may be performed at about 250 °C to about 450 °C, e.g., about 300 °C to about 400 °C. A heat treatment time may vary depending on the heat treatment temperature. In an implementation, the heat treatment may be performed for, e.g., about 3 hr to about 7 hr.

Maintaining the heat treatment time and temperature within the ranges may help ensure that a composite exhibiting excellent lifetime and capacity characteristics is manufactured.

An average particle diameter (D50) of the LTO may be about 0.1 μm to about 30 μm, e.g., about 0.1 μm to about 1 μm or about 0.685 μm. Maintaining the average particle diameter (D50) of the LTO within the range may help ensure that a ratio of a surface area of the conductive agent to a surface area of the negative electrode active material in the negative electrode active material composition including the same increases, thereby improving the electrode conductivity, and thus may help ensure excellent high rate discharge characteristics of the lithium secondary battery using the composite.

In the composite, an average particle diameter (D50) of the bronze phase titanium oxide may be about 0.01 μm to about 5 μm.

The term "average particle diameter (D50)" may refer to a particle diameter having an accumulation ratio of about 50% when an accumulation ratio to the particle diameter is calculated based on about 100% of the total volume of LTO particle powders. The average particle diameter (D50) is an average particle diameter based on volume, as measured by a wet laser method using a laser type particle size distribution measuring apparatus "MICROTRACK HRA" (manufactured by Nikkiso Co., Ltd.).

In addition, a particle diameter (D10) of the LTO may be about 0.1 μm to about 30 μm, e.g., about 0.427 μm. A particle diameter (D90) of the LTO may be about 0.1 μm to about 30 μm, e.g., about 1.196 μm. A particle diameter (D99.9) of the LTO may be about μm 0.1 μm to about 30 μm, e.g., about 1.923 μm.

The terms "particle diameter (D10), particle diameter (D90), and particle diameter (D99.9)" may refer to particle diameters having an accumulation ratio of about 10%, about 90%, and about 99.9%, respectively, when the accumulation ratio to the particle diameter is calculated based on about 100% of the total volume of particle powders. These may be measured by using a laser type particle size distribution measuring apparatus as in the average particle diameter (D50).

The LTO may be prepared by any suitable method, e.g., according to the following procedure. A lithium precursor and a titanium precursor may be mixed, followed by heat treatment to obtain an LTO.

A mixture ratio of the lithium precursor and the titanium precursor may be appropriately controlled such that the LTO of Formula 1 may be obtained. For example, an amount of the titanium precursor may be about 0.9 mole to about 2.5 moles, based on 1 mole of the lithium precursor.

The mixing may be performed in a mechanical mixing manner by using, e.g., a ball mill, a Banbury mixer, a homogenizer, or the like. The mechanical mixing may be performed for a variable time period, e.g., about 20 min to about 10 hr or about 30 min to about 3 hr. As the mechanical mixing is performed, an alcohol solvent, e.g., ethanol or the like, may be added thereto to help increase mixing efficiency.

Then, the mixture (including the lithium precursor and the titanium precursor) may be subjected to heat treatment under an air atmosphere or an oxygen atmosphere at about 400 °C to about 1,000 °C, e.g., about 600 °C to about 900 °C.

A heat treatment time may vary depending on the heat treatment temperature. In an implementation, the heat treatment may be performed for about 3 hr to about 7 hr.

Maintaining the heat treatment time and temperature within the ranges may help ensure that a desired LTO is obtained.

Examples of the lithium precursor may include, e.g., lithium carbonate ($Li_2CO_3$), lithium sulfate ($Li_2SO_4$), lithium nitrate ($LiNO_3$), lithium hydroxide (LiOH), or the like. Examples of the titanium precursor may include, e.g., titanium oxide ($TiO_2$), titanium hydroxide ($Ti(OH)_4$), or the like.

When titanium oxide is used as the titanium precursor, an average particle diameter of the titanium oxide is not particularly limited. In an implementation, particles having a diameter of, e.g., about 50 nm to about 500 nm, may be used.

The bronze phase titanium oxide may be prepared by any suitable method. For example, the bronze phase titanium oxide may be prepared according to the following procedure.

First, a sodium hydroxide aqueous solution and anatase type $TiO_2$ powder may be put into an autoclave. Then, a hydrothermal synthesis reaction thereof may be performed.

The sodium hydroxide aqueous solution may prepared by using deionized water, and a concentration of the sodium hydroxide aqueous solution may be about 10 M to about 18 M, e.g., about 15 M.

The hydrothermal synthesis reaction may be performed at about 150 °C to about 180 °C, e.g., about 170 °C.

A time that the hydrothermal synthesis reaction is performed may vary depending on the heat treatment temperature. In an implementation, the hydrothermal synthesis may be performed for, e.g., about 72 hr. After the hydrothermal synthesis, sodium titanate ($Na_2Ti_3O_7$) may be obtained.

Then, a hydrogen ion substitution reaction of sodium titanate may be performed to obtain hydrogen titanate. Subsequently, hydrogen titanate may be subjected to a heat treatment under an air atmosphere or an oxygen atmosphere to obtain a desired bronze phase titanium oxide.

The heat treatment may be performed at, e.g., about 300 °C to about 400 °C. The heat treatment may be performed for, e.g., about 3 hr to about 7 hr.

The hydrogen substitution reaction may be performed by putting sodium titanate into an acid solution while stirring. The stirring may be performed for about 3 hr or longer. The stirring may be performed at room temperature or a higher temperature. Or, the stirring may be sequentially performed from room temperature to a higher temperature.

The higher temperature may be about 45 °C to about 70 °C. The heat treatment may be performed at the higher temperature in order to help increase the hydrogen substitution reaction.

The acid solution may include, e.g., a hydrochloric acid or a nitric acid solution.

The bronze phase titanium oxide may be obtained in the shape of nanowires, rods, particles, or the like. In an implementation, the bronze phase titanium oxide may be used in the shape of, e.g., nanowires. In an implementation, the bronze phase titanium oxide may be used in the shape of, e.g., nanorods and/or nanoparticles.

The nanowires may have a length of about 1 μm to about 15 μm and a diameter of about nm 10 to about 200 nm. A nanowire-shaped bronze phase titanium oxide having a size within the above ranges may be advantageous in that a Li diffusion distance may be decreased, thereby facilitating diffusion of Li. When the bronze phase titanium oxide is in the shape of particles, the average particle diameter (D50) of the titanium oxide may be about 0.01 μm to about 5 μm.

The composite may be used as a negative electrode active material of a cell for storage of electric power on a large scale.

A negative electrode according to an embodiment includes the negative electrode active material including the above-described composite.

The negative electrode may include a binder in addition to the above-described negative electrode active material.

The binder is a component that facilitates binding of the active material with the conductive agent and the like and with a current collector. The binder may be added in an amount of about 1 part by weight to about 10 parts by weight based on about 100 parts by weight of the total weight of a negative electrode active material. Examples of the binder include polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene terpolymer (EPDM), sulfonated EPDM, styrene-butylene rubber, fluorine rubber, various copolymers, and the like.

The binder may be included in an amount of about 2 parts by weight to about 7 parts by weight, based on 100 parts by weight of the negative electrode active material. Maintaining the amount of the binder within the range may help ensure that the binding strength of an active material layer to a current collector is good.

The negative electrode may include a conductive agent.

When the composite is used as a negative electrode active material, the composite may serve as both an active material and a conductive agent, and thus, only a small amount of additional conductive agent may be used, compared to the amount of a conventional conductive agent used in a typical lithium secondary battery.

The conductive agent may include any suitable conductive agent that exhibits conductivity while not causing a chemical change in a corresponding battery.

The conductive agent may be included in an amount of, e.g., about 0.5 parts by weight to about 5 parts by weight or about 0.01 parts by weight to about 3 parts by weight, based on 100 parts by weight of the composite (as a negative electrode active material).

Maintaining the amount of the conductive agent within the range may help ensure that the obtained negative electrode exhibits excellent conductivity properties.

The conductive agent may include at least one carbon-based conductive agent selected from the group of, e.g., carbon black, carbon fiber, and graphite. The carbon black may include one selected from the group of, e.g., acetylene black, Ketjen black, Super P, channel black, furnace black, lamp black, and thermal black. The graphite may include natural graphite or artificial graphite.

The negative electrode may further include another conductive agent in addition to the above-described carbon-based conductive agents.

The other conductive agent may include one selected from the group of a conductive fiber such as metal fiber; carbon fluoride powder; a metal powder such as aluminum powder, and nickel powder; a conductive whisker such as zinc oxide and potassium titanate; and polyphenylene derivatives.

A lithium secondary battery according to an embodiment includes the above-described negative electrode.

The negative electrode includes a negative electrode active material including an LTO and a bronze phase titanium oxide according to an embodiment. An atomic ratio of lithium to titanium in the composite may be about 0.6 to about 1.8, e.g., about 0.7 to about 1.4.

The negative electrode may further include an additional negative electrode active material that is typically used in a lithium secondary battery, e.g., in addition to the above-described composite.

The additional negative electrode active material may include, e.g., a carbon-based material such as carbon or graphite, lithium metal, an alloy thereof, a silicon oxide-based material, or the like.

The negative electrode may be manufactured, e.g., by the following method.

First, a composite including the LTO and the bronze phase titanium oxide according to an embodiment, a binder, and a solvent may be mixed to prepare a composition for forming a negative electrode active material layer.

A conductive agent may be selectively added to the composition for forming the negative electrode active material layer.

Subsequently, the composition for forming the negative electrode active material layer may be applied on a negative current collector and dried to manufacture a negative electrode.

The negative current collector may have a thickness of about 3 $\mu$m to about 500 $\mu$m. The negative current collector may include any suitable current collector that exhibits conductivity while not causing a chemical change in a corresponding battery. In an implementation, the negative current collector may include, e.g., copper, stainless steel, aluminum, nickel, titanium, carbon subjected to heat treatment, surface-treated copper with carbon, nickel, titanium, silver or surface-treated stainless steel with carbon, nickel, titanium, silver or an aluminum-cadmium alloy. In addition, as with a positive electrode current collector, fine irregularities may be formed on a surface thereof to increase a binding strength of the negative electrode active material. The current collector may take on various forms, e.g., a film, a sheet, a foil, a net, a porous body, a foam body, or a non-woven fabric body.

The solvent may include, e.g., N-methyl pyrrolidone (NMP), acetone, water, or a mixture thereof. The solvent may be included in an amount of about 50 parts by weight to about 500 parts by weight, based on 100 parts by weight of the negative electrode active material. Maintaining the amount of the solvent to be within the range may help ensure that it is easy to perform a process for forming an active material layer.

According to an embodiment, a lithium secondary battery including the above-described negative electrode is provided. A method for manufacturing a lithium secondary battery, according to an embodiment, may be as follows.
In addition to the above-described negative electrode, a positive electrode may be manufactured according to the following procedure.

A positive electrode may be manufactured by applying a composition for forming a positive electrode active material layer on a current collector and drying the composition as in the manufacturing procedure of the above-described negative electrode.

The composition for forming the positive electrode active material layer may be manufactured by mixing a positive electrode active material, a binder, and a solvent.

The positive electrode active material may include, e.g., a lithium transition metal oxide that is typically used as a positive electrode active material in a lithium battery.

The conductive agent, binder, and solvent, may be the same as those in manufacturing the negative electrode in terms of type and content.

The lithium transition metal oxide may include one or more selected from the group of $LiCoO_2$, $LiNiO_2$, $LiMnO_2$, $LiMn_2O_4$, $Li(Ni_aCo_bMn_c)O_2$ ($0<a<1$, $0<b<1$, $0<c<1$, and $a+b+c=1$), $LiN_{1-Y}Co_YO_2$(where, $0\leq Y<1$), $LiCo_1$-$YMn_YO_2$(where, $O\leq Y<1$)$LiNi_{1-Y}Mn_YO_2$ (where, $0\leq Y<1$), $LiMn_{2-z}Ni_zO_4$(where, $0<Z<2$), $LiMn_{2-z}Co_zO_4$ (where, $0<Z<2$), $LiCoPO_4$, and $LiFePO_4$.

The positive electrode current collector may include any suitable current collector that has a thickness of about 3 $\mu$m to about 500 $\mu$m and exhibits conductivity while not causing a chemical change in a corresponding battery. In an implementation, the current collector may include, e.g., stainless steel, aluminum, nickel, titanium, carbon subjected to heat treatment, a surface-treated copper with carbon, nickel, titanium, or silver, a surface-treated stainless steel with carbon, nickel, titanium, or silver, or the like. An increase in the binding strength of the positive electrode active material may be facilitated by forming fine irregularities on the surface of the current collector. The current collector may take on various forms, e.g., a film, a sheet, a foil, a net, a porous body, a foam body, or a non-woven fabric body.

A separator may be included between the positive electrode obtained according to the procedure and the negative electrode. An organic electrolytic solution may be provided thereto to manufacture a lithium secondary battery.

The above-described lithium secondary battery may be manufactured, e.g., by sequentially stacking a negative electrode, the separator, and the cathode, winding or folding them to be put into a cylindrical or prismatic battery case or a pouch, and injecting an organic electrolytic solution into the battery case or pouch.

The separator may have a pore diameter of about 0.01 $\mu$m to about 10 $\mu$m and may have a thickness of about 5 $\mu$m to about 300 $\mu$m.

Examples of the separator may include a sheet or a non-woven fabric formed of an olefin-based polymer such as polypropylene, polyethylene, or a sheet or a non-woven fabric formed of glass fiber.

The organic electrolytic solution may include an electrolyte in which a lithium salt is dissolved in an organic solvent.

The organic solvent may include one selected from the group of propylene carbonate, ethylene carbonate, butylene carbonate, dimethyl carbonate, diethyl carbonate, methyl ethyl carbonate, ethyl propyl carbonate, methyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, 1,3-dioxolane, 4-methyldioxolane, N,N-dimethylformamide, dimethylacetamide, dimethyl sulfoxide, 1,4-dioxane, 1,2-dimethoxyethane, sulfolane, dichloroethane, chlorobenzene, nitrobenzene, diethylene glycol, dimethyl ether, and any combinations thereof.

The lithium salt may include one selected from the group of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(CyF_{2y+1}SO_2)$(where x and y are natural numbers), LiCl, LiI, and any combinations thereof.

In an implementation, the lithium secondary battery may use an organic solid electrolyte and/or an inorganic solid electrolyte together in addition to the separator. When the organic solid electrolyte and/or the inorganic solid electrolyte are/is used, the solid electrolyte may also serve as a separator in some cases, and thus the above-described separator may not be used.

Examples of the organic solid electrolyte may include polyethylene derivatives, polyethylene oxide derivatives, polypropylene oxide derivatives, phosphoric acid ester polymers, polyester sulfide, polyvinyl alcohols, polyvinylidene fluoride, and the like.

Examples of the inorganic solid electrolyte may include $Li_3N$, LiI, $Li_5NI_2$, $Li_3N$-LiI-LiOH, $Li_2SiS_3$, $Li_4SiO_4$, $Li_4SiO_4$-LiI-LiOH, or $Li_3PO_4$-$Li_2S$-$SiS_2$.

FIG. 1C illustrates a schematic view of a representative structure of a lithium secondary battery according to an embodiment.

Referring to FIG. 1C, the lithium secondary battery 30 may include a positive electrode 23, a negative electrode 22, a separator 24 between the positive electrode 23 and the negative electrode 22, an electrolyte (not shown) impregnated in the positive electrode 23, the negative electrode 22, and the separator 24, a battery container 25, and a sealing member 26 for sealing the battery container 25. The lithium secondary battery 30 may be configured by sequentially stacking the positive electrode 23, the separator 24, the negative electrode 22, and the separator 24, spiral-winding the resultant, and accommodating the spirally-wound body into the battery container 25.

The lithium secondary battery may exhibit excellent capacity properties as well as lifetime and high rate discharge characteristics.

The term "high rate discharge characteristics" may refer to a ratio of a capacity actually discharged when a fully (about 100%) charged cell is discharged with a current that discharges all of the cell capacity within a time less than a predetermined time (e.g., less than about 10 hr) to a capacity actually discharged when a cell which is fully charged (about 100%) is discharged with a current that consumes all of the cell capacity for a predetermined time (for example, about 10 hr).

The following Examples and Comparative Examples are provided in order to set forth particular details of one or more embodiments. However, it will be understood that the embodiments are not limited to the particular details described. Further, the Comparative Examples are set forth to highlight certain characteristics of certain embodiments, and are not to be construed as either limiting the scope of the invention as exemplified in the Examples or as necessarily being outside the scope of the invention in every respect.

Preparative Example 1: Preparation of $Li_4Ti_5O_{12}$

About 1.2876 g of $Li_2CO_3$ and about 1.7397 g of $TiO_2$ were mixed with water for about 30 min by using a ball mill. Here, the amount of the water was 33 parts by weight based on 100 parts by weight of total weight of $Li_2CO_3$ and $TiO_2$. The mixture was spray-dried, followed by heat treatment at about 850 °C for about 5 hr under an air atmosphere to obtain $Li_4Ti_5O_{12}$ (hereinafter, referred to as "LTO (A)") having an average particle diameter (D50) of about 22.964 $\mu$m in a powder state.

About 1.2876 g of $Li_2CO_3$ and about 1.7397 g of $TiO_2$ were mixed for about 30 min by using a ball mill. The mixture was heat treated at about 850 °C for about 5 hr under air atmosphere to obtain $Li_4Ti_5O_{12}$ (hereinafter, referred to as "LTO (B)") having an average particle diameter (D50) of about 0.685 $\mu$m in a powder state

According to the procedure, LTO (A) having an average particle diameter (D50) of about 22.964 $\mu$m, manufactured after being subjected to the spray-drying and LTO (B) having an average particle diameter (D50) of about 0.685 $\mu$m, manufactured without being subjected to the spray-drying, were prepared. LiOH was respectively added to achieve a concentration of about 0.15 mole/l in an aqueous solution (in which $TiOCl_2$ was dissolved), such that the atomic ratio of Li/Ti is about 4/5, followed by microwave heating at about 3.0 W in a microwave reaction system.

Next, LTO nanoparticles formed in the aqueous solution were collected, followed by heat treatment at about 800°C for about 4 hr to prepare LTO (hereinafter, referred to as "LTO (C)") having an average particle diameter (D50) of about 0.200 μm.

Preparative Example 2: Preparation of Bronze Phase $TiO_2$ nanowires (Hereinafter, referred to as "$TiO_2$-B")

First, a 15 M NaOH aqueous solution and anatase type $TiO_2$ powder were put into an autoclave. Then, a hydrothermal synthesis thereof was performed at about 170°C for about 72 hr. After the hydrothermal synthesis, sodium titanate $Na_2Ti_3O_7$ was obtained.

About 1 M hydrochloric acid aqueous solution was added to the sodium titanate. Then, a hydrogen substitution reaction was performed by stirring the mixture at room temperature for about 6 hr and a high temperature of about 50°C for about 6 hr to obtain hydrogen titanate ($H_2Ti_3O_7$). Subsequently, hydrogen titanate was subjected to heat treatment at about 350 °C under an air atmosphere for about 3 hr to about 7 hr to obtain $TiO_2$-B nanowires.

Example 1: Manufacture of Composite

The LTO (A) prepared according to Preparative Example 1 and the bronze phase $TiO_2$ nanowires prepared according to Preparative Example 2 were mixed in a weight ratio of about 6:4, followed by heat treatment at about 350 °C under an oxygen gas atmosphere to prepare a composite. The amount of LTO (A) was about 0.261 moles, based on 1 mole of bronze phase $TiO_2$.

Example 2: Manufacture of Composite

The LTO (B) prepared according to Preparative Example 1 and the bronze phase $TiO_2$ nanowires prepared according to Preparative Example 2 were mixed in a weight ratio of about 6:4, followed by heat treatment at about 300 °C to about 400 °C under an oxygen gas atmosphere to prepare a composite. The amount of LTO (B) was about 0.261 moles, based on 1 mole of bronze phase $TiO_2$.

Example 3: Manufacture of Composite

The LTO (A) prepared according to Preparative Example 1 and the bronze phase $TiO_2$ nanowires prepared according to Preparative Example 2 were mixed in a weight ratio of about 7:3, followed by heat treatment at about 300 °C to about 400 °C under an oxygen gas atmosphere to prepare a composite. The amount of LTO (A) was about 0.406 moles, based on 1 mole of bronze phase $TiO_2$.

Example 4: Manufacture of Composite

The LTO (B) prepared according to Preparative Example 1 and the bronze phase $TiO_2$ nanowires prepared according to Preparative Example 2 were mixed in a weight ratio of about 7:3, followed by heat treatment at about 300 °C to about 400 °C under an oxygen gas atmosphere to prepare a composite. The amount of LTO (B) was about 0.406 moles, based on 1 mole of bronze phase $TiO_2$.

Example 5: Manufacture of Composite

The LTO (A) prepared according to Preparative Example 1 and the bronze phase $TiO_2$ nanowires prepared according to Preparative Example 2 were mixed in a weight ratio of about 8:2, followed by heat treatment at about 300 °C to about 400 °C under an oxygen gas atmosphere to prepare a composite. The amount of LTO (A) was about 0.696 moles, based on 1 mole of bronze phase $TiO_2$.

Example 6: Manufacture of Composite

The LTO (B) prepared according to Preparative Example 1 and the bronze phase $TiO_2$ nanowires prepared according to Preparative Example 2 were mixed in a weight ratio of about 8:2, followed by heat treatment at about 300 °C to about 400 °C under an oxygen gas atmosphere to prepare a composite. The amount of LTO (B) was about 0.696 moles, based on 1 mole of bronze phase $TiO_2$.

Example 7: Manufacture of Composite

The LTO (A) prepared according to Preparative Example 1 and the bronze phase $TiO_2$ nanowires prepared according to Preparative Example 2 were mixed in a weight ratio of about 9:1, followed by heat treatment at about 300 °C to about 400 °C under an oxygen gas atmosphere to prepare a composite. The amount of LTO (A) was about 1.566 moles, based on 1 mole of bronze phase $TiO_2$.

Example 8: Manufacture of Composite

The LTO (B) prepared according to Preparative Example 1 and the bronze phase $TiO_2$ nanowires prepared according to Preparative Example 2 were mixed in a weight ratio of about 9:1, followed by heat treatment at about 300 °C to about 400 °C under an oxygen gas atmosphere to prepare a composite. The amount of LTO (B) was about 1.566 moles, based on 1 mole of bronze phase $TiO_2$.

Example 9: Manufacture of Composite

The LTO (C) prepared according to Preparative Example 1 and the bronze phase $TiO_2$ nanowires prepared according to Preparative Example 2 were mixed in a weight ratio of about 9:1, followed by heat treatment at about 300 °C to about 400 °C under an oxygen gas atmosphere to prepare a composite. The amount of LTO (C) was about 1.566 moles, based on 1 mole of bronze phase $TiO_2$.

Example 10: Manufacture of Composite

The LTO (C) prepared according to Preparative Example 1 and the bronze phase $TiO_2$ nanowires prepared according to Preparative Example 2 were mixed in a weight ratio of about 8:2, followed by heat treatment at about 300 °C to about 400 °C under an oxygen gas atmosphere to prepare a composite. The amount of LTO (C) was about 0.696 moles, based on 1 mole of bronze phase $TiO_2$.

Example of Manufacture 1: Manufacture of Negative Electrode and Coin Half Cell

About 0.94 g of the composite of Example 1 and about 0.03 g of carbon black as a conductive agent were mixed, about 0.6 g of a binder solution in which polyvinylidene fluoride (PVdF) was dissolved in N-methyl pyrrolidone (NMP) in an amount of about 5 wt% was added thereto, followed by mechanical stirring to prepare a slurry.

The slurry was applied on an aluminum foil to a thickness of about 90 μm, followed by vacuum drying at about 120 °C to manufacture a negative electrode.

Subsequently, the negative electrode was wound into a roll with a diameter of about 12 mm, and then lithium metal was used as a counter electrode to manufacture a 2032 type coin half cell. As an electrolytic solution, a 1.3 M $LiPF_6$ solution using a solvent in which ethylene carbonate, diethyl carbonate, and methyl ethyl carbonate were mixed in a volume ratio of about 3:5:2, was used.

Examples of Manufacture 2 to 10: Manufacture of Negative Electrode and Coin Half Cell

Negative electrodes and coin half cells were manufactured in the same manner as in Example of Manufacture 1, except that composites in Examples 2 to 10 were respectively used instead of the composite in Example 1.

Comparative Example of Manufacture 1: Manufacture of Negative Electrode and Coin Half Cell

A negative electrode and a coin half cell were manufactured in the same manner as in Example of Manufacture 1, except that the LTO (A) according to Preparative Example 1 was used instead of the composite of Example 1.

Comparative Example of Manufacture 2: Manufacture of Negative Electrode and Coin Half Cell

A negative electrode and a coin half cell were manufactured in the same manner as in Example of Manufacture 1, except that the LTO (B) according to Preparative Example 1 was used instead of the composite of Example 1.

Comparative Example of Manufacture 3: Manufacture of Negative Electrode and Coin Half Cell

A negative electrode and a coin half cell were manufactured in the same manner as in Example of Manufacture 1, except that the LTO (C) according to Preparative Example 1 was used instead of the composite in Example 1.

Comparative Example of Manufacture 4: Manufacture of Negative Electrode and Coin Half Cell

A negative electrode and a coin half cell were manufactured in the same manner as in Example of Manufacture 1, except that the bronze phase $TiO_2$ nanowires according to Preparative Example 2 were used instead of the composite in Example 1.

Evaluative Example

Evaluative Example 1: XRD Analysis

1) X-ray Diffraction Spectrum of Composite

The X-ray diffraction spectra of the composites manufactured according to Examples 2, 4, 6, and 8 were analyzed to calculate an intensity ratio of the main peak (2θ = about 23° to about 27°) of the bronze phase titanium oxide ($TiO_2$-B) to a main peak (2θ = about 17° to about 19°) of LTO. The results are shown in the following Table 1.

Table 1

| Classification | Composite composition (LTO(B)/$TiO_2$-B) (weight ratio) | Intensity of LTO main peak (counts) | Intensity of TB (nanowire) main peak (counts) | $I_{NW-TB}/I_{LTO}$ |
|---|---|---|---|---|
| Example 2 | 6:4 | 507 | 49 | 0.097 |
| Example 4 | 7:3 | 542 | 30 | 0.055 |
| Example 6 | 8:2 | 574 | 27 | 0.047 |
| Example 8 | 9:1 | 653 | 24 | 0.037 |

In Table 1, $I_{NW-TB}$ and $I_{LTO}$ represent intensities of a 1st main peak (2θ = about 23° to about 27°) of $TiO_2$-B nanowires and a main peak (1st main peak)(2θ = about 17° to about 19°) of LTO.

2) X-ray Diffraction Spectra of Bronze Phase Titanium Oxide and

Anatase Phase Titanium Oxide

For comparison of the composite with XRD, X-ray diffraction spectra of the anatase phase titanium oxide and the bronze phase titanium oxide are shown in FIG. 1D.

Evaluative Example 2: Scanning Electron Microscopic Analysis

1) LTO (A) and LTO (B) prepared according to Preparative Example 1 The LTO (A) and LTO (B) prepared according to Preparative Example 1 were analyzed by using a scanning electron microscope. The result is shown in FIGS. 2 and 3.
2) Bronze phase $TiO_2$ nanowires prepared according to Preparative Example 2

The bronze phase $TiO_2$ nanowires prepared according to Preparative Example 2 were analyzed by using a scanning electron microscope, and the results are shown in FIGS. 4 and 5.
FIG. 4 illustrates an image with a magnification of about 5,000 times and FIG. 5 illustrates an image with a magnification of about 30,000 times.

3) Composite prepared according to Example 1

The composite prepared according to Example 1 was analyzed by using a scanning electron microscope, and the results are shown in FIGS. 6 and 7.
FIGS. 6 and 7 illustrate images with magnifications of about 700 times and about 20,000 times, respectively.

Evaluative Example 3: Combined Density

The combined densities of the negative electrodes prepared according to Examples of Manufacture 1 to 6 and 8 to 10 and Comparative Examples of Manufacture 1-3 were evaluated. The results are shown in the following Tables 2 to 4.

Table 2

| Classification | Composition (Weight ratio) | Combined density (g/cc) |
|---|---|---|
| Example of Manufacture 1 | LTO (A)/$TiO_2$-B (6/4) | 2.10 |
| Example of Manufacture 3 | LTO (A)/$TiO_2$-B (7/3) | 2.10 |
| Example of Manufacture 5 | LTO (A)/$TiO_2$-B (8/2) | 2.08 |
| Comparative Example of Manufacture 1 | LTO (A) | 1.86 |

Table 3

| Classification | Composition (Weight ratio) | Combined density (g/cc) |
|---|---|---|
| Example of Manufacture 2 | LTO (B)/$TiO_2$-B (6/4) | 2.12 |
| Example of Manufacture 4 | LTO (B)/$TiO_2$-B (7/3) | 2.15 |
| Example of Manufacture 6 | LTO (B)/$TiO_2$-B (8/2) | 2.10 |
| Example of Manufacture 8 | LTO (B)/$TiO_2$-B (9/1) | 2.10 |
| Comparative Example of Manufacture 2 | LTO (B) | 1.91 |

Table 4

| Classification | Composition (Weight ratio) | Combined density (g/cc) |
|---|---|---|
| Example of Manufacture 9 | LTO (C)/$TiO_2$-B (9/1) | 2.23 |
| Example of Manufacture 10 | LTO (C)/$TiO_2$-B (8/2) | 2.27 |
| Comparative Example of Manufacture 3 | LTO (C) | 1.86 |

Evaluative Example 4: Discharge Capacity

Charge and discharge characteristics of the coin half cells respectively manufactured in Examples of Manufacture 1 to 6 and 9 and 10 and Comparative Examples of Manufacture 1-3 were evaluated by using a charge/discharge apparatus (Manufacturing Company: TOYO, Model: TOYO-3100).

In the coin half cells manufactured according to Examples of Manufacture 1, 3, and 5 and Comparative Examples of Manufacture 1-3, discharge capacities were evaluated, and the results are shown in Table 5 below. In the coin half cells manufactured according to Examples of Manufacture 2, 4, 6, and 8 and Comparative Examples of Manufacture 2, discharge capacities were measured, and the results are shown in Table 6 below.

In the coin half cells manufactured according to Examples of Manufacture 9 and 10 and Comparative Example of Manufacture 3, discharge capacities were measured, and the results are shown in Table 7, below. In the coin half cells manufactured according to Examples of Manufacture 1, 3, and 5 and Comparative Example of Manufacture 1, charge and discharge characteristics were analyzed, and the results are shown in FIG. 8. In the coin half cells manufactured according to Examples of Manufacture 2, 4, 6, and 8 and Comparative Example of Manufacture 2, charge and discharge characteristic were analyzed, and the results are shown in FIG. 9A.

In FIG. 8, LTO/$TiO_2$-B (6/4) is from Example of Manufacture 1, LTO/$TiO_2$-B (7/3) is from Example of Manufacture 3, and LTO/$TiO_2$-B (8/2) is from Example of Manufacture 5, and LTO is from Comparative Example of Manufacture 1.

In FIG. 9A, LTO/$TiO_2$-B (6/4) is from Example of Manufacture 2, LTO/$TiO_2$-B (7/3) is from Example of Manufacture 4, LTO/$TiO_2$-B (8/2) is from Example of Manufacture 6, LTO/$TiO_2$-B (9/1) is from Example of Manufacture 8, and LTO is from Comparative Example of Manufacture 2.

In the coin half cells prepared according to Examples of Manufacture 9 and 10 and Comparative Example of Manufacture 3, charge and discharge characteristics were analyzed, and the results are shown in FIG. 9B. In FIG. 9B, LTO/$TiO_2$-B (9/1) is from Example of Manufacture 9, LTO/$TiO_2$-B (8/2) is from Example of Manufacture 10, and LTO is from Comparative

Example of Manufacture 3.

In the evaluation of the discharge capacities, the coin half cells respectively manufactured in Examples of Manufacture and Comparative Example of Manufacture were charged at a rate (C-rate) of about 0.1 C until the voltage became about 1.0 V, and then further charged at a constant voltage of about 1.0 V until the current became about 0.01 C. Next, the cells were rested for about 10 min. Subsequently, each of the coin half cells was discharged at a rate of about 0.1 C until the voltage became about 2.5 V, and the discharge capacity was evaluated at the time. The "C" refers to a discharge rate of a cell, and denotes a current value obtained by dividing the total capacity of the cell by the total discharge time.

Table 5

| Classification | Composition (Weight ratio) | Discharge Capacity (mAh/g) | Discharge Capacity (mAh/cc) |
|---|---|---|---|
| Example of Manufacture 1 | LTO (A)/$TiO_2$-B (6/4) | 201 | 397 |
| Example of Manufacture 3 | LTO (A)/$TiO_2$-B (7/3) | 193 | 381 |
| Example of Manufacture 5 | LTO(A)/$TiO_2$-B(8/2) | 182 | 356 |
| Comparative Example of Manufacture 1 | LTO (A) | 166 | 290 |

Table 6

| Classification | Composition (Weight ratio) | Discharge Capacity (mAh/cc) | Discharge Capacity (mAh/cc) |
|---|---|---|---|
| Example of Manufacture 2 | LTO (B)/$TiO_2$-B (6/4) | 202 | 402 |
| Example of Manufacture 4 | LTO (B)/$TiO_2$-B (7/3) | 191 | 386 |
| Example of Manufacture 6 | LTO (B)/$TiO_2$-B (8/2) | 189 | 382 |
| Example of Manufacture 8 | LTO (B)/$TiO_2$-B (9/1) | 180 | 356 |
| Comparative Example of Manufacture 2 | LTO (B) | 166 | 298 |

Table 7

| Classification | Composition (Weight ratio) | Discharge Capacity (mAh/g) | Discharge Capacity (mAh/cc) |
|---|---|---|---|
| Example of Manufacture 9 | LTO (C)/$TiO_2$-B (9/1) | 177 | 371 |
| Example of Manufacture 10 | LTO (C)/$TiO_2$-B (8/2) | 185 | 395 |
| Comparative Example of Manufacture 3 | LTO (C) | 171 | 298 |

From Table 5, it may be seen that the discharge capacities per unit weight and per unit volume of the negative electrodes in the half cells in Examples of Manufacture 1, 3, and 5 were improved, compared to those in Comparative Example of Manufacture 1. In addition, from the result of Table 6, it may be seen that the negative electrodes in the half cells manufactured in Examples of Manufacture 2, 4, 6, and 8 exhibited improved discharge capacity characteristics, compared to those in Comparative Example of Manufacture 2.

Referring to Table 7, discharge capacities per unit weight and per unit volume of negative electrodes in the half cells manufactured in Examples of Manufacture 9 and 10 were improved, compared to those in Comparative Example of Manufacture 3.

Evaluative Example 5: High Rate Discharge Characteristics

The coin half cells respectively manufactured in Examples of Manufacture 1 to 6 and 8 and Comparative Example of Manufacture 4 were charged under conditions of a constant current (about 0.1 C) and a constant voltage (about 1.0 V, about 0.01 C cut-off), rested for about 10 min, and discharged until the voltage became about 2.5 V under conditions of a constant current (about 0.1 C, about 0.2 C, about 0.5 C, about 1 C, about 2 C, about 5 C, or about 10 C). Under the above conditions, high rate discharge characteristics of each of the coin half cells were evaluated.

In the coin half cells according to Examples of Manufacture 1 to 6 and Comparative Example of Manufacture 4, high rate discharge characteristics are shown in Table 8, below.

In Table 8, high rate discharge characteristics were calculated by the following Equation 1.

[Equation 1]

High rate discharge characteristics (%) = (Discharge capacity when the cell is discharged at 1 C)/(Discharge capacity when the cell is discharged at a rate of about 0.2 C)*100

Table 8

| Classification | High rate discharge characteristics (1 C/0.2 C)(%) |
|---|---|
| Example of Manufacture 1 | 91.5 |
| Example of Manufacture 2 | 94.4 |
| Example of Manufacture 3 | 93.7 |
| Example of Manufacture 4 | 94.3 |
| Example of Manufacture 5 | 94.8 |
| Example of Manufacture 6 | 97.1 |
| Comparative Example of Manufacture 4 | 71.2 |

From Table 8, it may be seen that coin half cells in Examples of Manufacture 1 to 6 had excellent high rate discharge characteristics, compared to those in Comparative Example of Manufacture 4. Here, the phrase 'excellent high rate discharge characteristics' indicates that the decrease rate of a normalized capacity (e.g., capacity retention) was small as the discharge rate (C-rate) increased. It may also be seen that the high rate discharge characteristics of LTO in Examples of Manufacture 2, 4, and 6 were further increased, compared to those in Examples of Manufacture 1, 3, and 5, respectively. From the result, it may be seen that as the particle diameter of LTO decreased, high rate characteristics were improved.

Evaluative Example 6: Evaluation of lifetime Characteristics

For the coin half cells respectively manufactured in Examples of Manufacture 1, 4, and 8 to 10 and Comparative Examples of Manufacture 2-3, a charge and discharge experiment was performed about 50 times under conditions of charging at a constant current (about 1 C) and a constant voltage (about 1.0 V and about 0.01 C cut-off), resting for about 10 min, and discharging at a constant current (about 1C, room temperature (about 20 °C), and about 2.5 V cut-off).

Lifetime characteristics of each of the coin half cells were evaluated as a change in normalized capacity according to the number of charge and discharge cycles. Lifetime characteristics of the cells according to Examples of Manufacture 1, 3, and 5 are shown in FIG. 10.

In FIG. 10, LTO/$TiO_2$-B (6/4) was from Example of Manufacture 1, LTO/$TiO_2$-B (7/3) was from Example of Manufacture 3, and LTO/$TiO_2$-B (8/2) was from Example of Manufacture 5.

In addition, lifetime characteristics of coin half cells according to Examples of Manufacture 4, 6, and 8 and Comparative Example of Manufacture 2 are shown in FIG. 11, and the results of the capacity retention characteristics of coin half cells according to Examples of Manufacture 4, 6, and 8 and Comparative Example of Manufacture 2 and 4 are shown in Table 9 below. In addition, lifetime characteristics of coin half cells according to Examples of Manufacture 9 and 10 and Comparative Example of Manufacture 3 are shown in FIG. 12, and the results are shown in Table 10 below.

In FIG. 11, LTO/$TiO_2$-B (7/3) is from Example of Manufacture 4, LTO/$TiO_2$-B (8/2) was from Example of Manufacture 6, LTO/$TiO_2$-B (9/1) was from Example of Manufacture 1, and LTO was from Comparative Example of Manufacture 1.

In FIG. 12, LTO/$TiO_2$-B (9/1) was from Example of Manufacture 9, LTO/$TiO_2$-B (8/2) was from Example of Manufacture 10, and LTO was from Comparative Example of Manufacture 3.

The "capacity retention" was calculated by the following Equation 2.

[Equation 2]

Capacity retention (%) = (Discharge capacity when the cell is discharged at the 50$^{th}$ cycle /(Discharge capacity when the cell is discharged at the first cycle)*100

Table 9

| Electrode | Composition | Capacity retention (%) @ 50 cyc |
|---|---|---|
| Comparative Example of Manufacture 2 | LTO (B) | 94.0 |
| Comparative Example of Manufacture 4 | $TiO_2$-B | 22.2 |
| Example of Manufacture 8 | LTO(B)/$TiO_2$-B (9/1) | 101.1 |
| Example of Manufacture 6 | LTO(B)/$TiO_2$-B (8/2) | 95.6 |
| Example of Manufacture 4 | LTO(B)/$TiO_2$-B (7/3) | 97.4 |

Table 10

| Electrode | Composition | Capacity retention (%) @ 50 cyc |
|---|---|---|
| Example of Manufacture 9 | LTO (C)/$TiO_2$-B (9/1) | 95.8 |
| Example of Manufacture 10 | LTO (C)/$TiO_2$-B (8/2) | 95.0 |
| Comparative Example of Manufacture 3 | LTO (C) | 94.7 |

Referring to FIG. 11 and Table 9, it may be seen that lifetime characteristics of the coin half cells in Examples of Manufacture 4, 6, and 8 has been improved, compared to those in the coin half cells in Comparative Example of Manufacture 2.

Referring to FIG. 12 and Table 10, it may be seen that lifetime characteristics of the coin half cells in Examples of Manufacture 9 and 10 were improved, compared to those in Comparative Example of Manufacture 1. Here, the fact that lifetime characteristics were improved means that the decrease rate of the normalized capacity (e.g., capacity retention) was decreased as the number of charge and discharge cycles increased.

According to an embodiment, a negative electrode having excellent combined density and energy density may be manufactured. If the electrode is used, a lithium secondary battery having excellent capacity and of which high rate characteristics and lifetime characteristics are improved, may be manufactured.

Negative electrode active materials should have good capacity, high rate discharge characteristics, and lifetime characteristics.

The embodiments provide lithium secondary batteries, the capacity and lifetime characteristics of which may be improved.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

Accordingly, it will be understood by those of skill in the art that various changes in form and details may be made without departing from the scope of the present invention as set forth in the following claims.

## Claims

1. A composite, comprising:

   a lithium titanium oxide represented by the following Formula 1:

   [Formula 1] $Li_{4+a}Ti_{5-b}M_cO_{12-d}$

   wherein $-0.2 \leq a \leq 0.2$, $-0.3 \leq b \leq 0.3$, $0 \leq c \leq 0.3$, and $-0.3 \leq d \leq 0.3$, and M is a metal selected from Groups 1 to 6, Group 8 to 15; and a bronze phase titanium oxide represented by the following Formula 2:

   [Formula 2] $Ti_{1+x}O_{2+y}$

   wherein $-0.2 \leq x \leq 0.2$ and $-0.2 \leq y \leq 0.2$;
   wherein the lithium titanium oxide is included in the composite in an amount of about 0.01 mole to about 99 moles, based on 1 mole of the bronze phase titanium oxide.

2. The composite as claimed in claim 1, wherein M is a metal selected from the group of lithium (Li), sodium (Na), magnesium (Mg), aluminum (Al), calcium (Ca), strontium (Sr), chromium (Cr), vanadium (V), iron (Fe), cobalt (Co), nickel (Ni), zirconium (Zr), zinc (Zn), silicon (Si), yttrium (Y), niobium (Nb), gallium (Ga), tin (Sn), molybdenum (Mo), tungsten (W), barium (Ba), lanthanum (La), cerium (Ce), silver (Ag), tantalum (Ta), hafnium (Hf), ruthenium (Ru), bismuth (Bi), antimony (Sb), and arsenic (As).

3. The composite as claimed in claim 1 or 2, wherein an atomic ratio of lithium to titanium in the composite is about 0.6 to about 1.8.

4. The composite as claimed in any of claims 1-3, wherein the lithium titanium oxide is $Li_4Ti_5O_{12}$, and the bronze phase titanium oxide is $TiO_2$.

5. The composite as claimed in any of claims 1-4, wherein a ratio of an intensity of a main peak of the bronze phase titanium oxide ($TiO_2$-B) to an intensity of a main peak of the lithium titanium oxide is about 0.03 to about 2 in an X-ray diffraction spectrum of the composite.

6. A method of manufacturing a composite including a lithium titanium oxide and a bronze phase titanium oxide according to claim 1, the method comprising:

   providing a lithium titanium oxide;
   providing a bronze phase titanium oxide;
   mixing the lithium titanium oxide and the bronze phase titanium oxide;
   and
   subjecting the mixture to a heat treatment.

7. The method as claimed in claim 6, wherein the heat treatment is performed at about 250 °C to about 450 °C under an inert gas atmosphere or an oxidizing gas atmosphere.

8. The method as claimed in any of claims 6 or 7, wherein providing the bronze phase titanium oxide includes:

   performing a hydrogen ion substitution reaction on sodium titanate to obtain hydrogen titanate; and
   subjecting the hydrogen titanate to heat treatment under an air atmosphere or an oxygen atmosphere.

9. A negative electrode active material comprising the composite as claimed in any of claims 1-5.

10. A negative electrode comprising the negative electrode active material as claimed in claim 9.

**11.** A lithium secondary battery comprising the negative electrode as claimed in claim 10.

**Patentansprüche**

**1.** Verbundstoff, der folgendes umfasst:

ein Lithiumtitanoxid, das durch die folgende Formel 1 dargestellt ist:

[Formel 1] $Li_{4+a}Ti_{5-b}M_cO_{12-d}$

wobei $-0{,}2 \leq a \leq 0{,}2$, $-0{,}3 \leq b \leq 0{,}3$, $0 \leq c \leq 0{,}3$ und $-0{,}3 \leq d \leq 0{,}3$, und
M ein Metall ist, das aus den Gruppen 1 bis 6, Gruppen 8 bis 15 ausgewählt wird; und
ein Bronzephasentitanoxid, das durch die folgende Formel 2 dargestellt ist:

[Formel 2] $Ti_{1+x}O_{2+y}$

wobei $-0{,}2 \leq x \leq 0{,}2$ und $-0{,}2 \leq y \leq 0{,}2$;
wobei das Lithiumtitanoxid in dem Verbundstoff in einer Menge von etwa 0,01 Mol bis etwa 99 Mol vorhanden ist, auf der Basis von 1 Mol des Bronzephasentitanoxids.

**2.** Verbundstoff nach Anspruch 1, wobei M ein Metall ist, das aus folgender Gruppe ausgewählt wird: Lithium (Li), Natrium (Na), Magnesium (Mg), Aluminium (Al), Kalzium (Ca), Strontium (Sr), Chrom (Cr), Vanadium (V), Eisen (Fe), Kobalt (Co), Nickel (Ni), Zirkonium (Zr), Zink (Zn), Silizium (Si), Yttrium (Y), Niob (Nb), Gallium (Ga), Zinn (Sn), Molybdän (Mo), Wolfram (W), Barium (Ba), Lanthan (La), Cerium (Ce), Silber (Ag), Tantal (Ta), Hafnium (Hf), Ruthenium (Ru), Bismut (Bi), Antimon (Sb) und Arsen.

**3.** Verbundstoff nach Anspruch 1 oder 2, wobei ein Atomverhältnis von Lithium zu Titan in dem Verbundstoff etwa 0,6 bis etwa 1,8 beträgt.

**4.** Verbundstoff nach einem der Ansprüche 1 bis 3, wobei das Lithiumtitanoxid $Li_4Ti_5O_{12}$ ist, und wobei das Bronzephasentitanoxid $TiO_2$ ist.

**5.** Verbundstoff nach einem der Ansprüche 1 bis 4, wobei ein Verhältnis einer Intensität einer Hauptspitze des Bronzephasentitanoxids ($TiO_2$-B) zu einer Intensität einer Hauptspitze des Lithiumtitanoxids in einem Röntgenstrahlbeugungsspektrum des Verbundstoffs etwa 0,03 zu etwa 2 beträgt.

**6.** Verfahren zur Herstellung eines Verbundstoffs, der ein Lithiumtitanoxid und ein Bronzephasentitanoxid nach Anspruch 1 umfasst, wobei das Verfahren folgendes umfasst:

das Bereitstellen eines Lithiumtitanoxids;
das Bereitstellen eines Bronzephasentitanoxids;
das Mischen des Lithiumtitanoxids und des Bronzephasentitanoxids; und
das Aussetzen der Mischung einer Hitzebehandlung.

**7.** Verfahren nach Anspruch 6, wobei die Hitzebehandlung bei etwa 250 °C bis etwa 450 °C in einer Inertgasatmosphäre oder einer oxidierenden Gasatmosphäre durchgeführt wird.

**8.** Verfahren nach einem der Ansprüche 6 oder 7, wobei das Bereitstellen des Bronzephasentitanoxids folgendes aufweist:

das Ausführen einer Wasserstoffionensubstitutionsreaktion an Natriumtitanat, um Wasserstofftitanat zu erhalten; und
das Aussetzen des Wasserstofftitanats einer Hitzebehandlung in einer Luftatmosphäre oder einer Sauerstoffatmosphäre.

**9.** Negativelektroden-Aktivmaterial, welches den Verbundstoff nach einem der Ansprüche 1 bis 5 umfasst.

**10.** Negativelektrode, die das Negativelektroden-Aktivmaterial nach Anspruch 9 umfasst.

**11.** Lithium-Sekundärzelle, welche die Negativelektrode nach Anspruch 10 umfasst.

## Revendications

**1.** Composite, comprenant :

un oxyde de titane de lithium représenté par la formule 1 suivante :

[Formule 1] $Li_{4+a}Ti_{5-b}M_cO_{12-d}$

dans laquelle $-0{,}2\leq a\leq 0{,}2$, $-0{,}3\leq b\leq 0{,}3$, $0\leq c\leq 0{,}3$, et $-0{,}3\leq d\leq 0{,}3$, et
M est un métal choisi parmi les groupes 1 à 6 et 8 à 15 ; et
un oxyde de titane en phase bronze représenté par la formule 2 suivante :

[Formule 2] $Ti_{1+x}O_{2+y}$

dans laquelle $-0{,}2\leq x\leq 0{,}2$ et $-0{,}2\leq y\leq 0{,}2$ ;
dans lequel l'oxyde de titane de lithium est inclus dans le composite en une quantité d'environ 0,01 mole à environ 99 moles, sur la base de 1 mole de l'oxyde de titane en phase bronze.

**2.** Composite selon la revendication 1, dans lequel M est un métal choisi dans le groupe constitué de lithium (Li), sodium (Na), magnésium (Mg), aluminium (Al), calcium (Ca), strontium (Sr), chrome (Cr), vanadium (V), fer (Fe), cobalt (Co), nickel (Ni), zirconium (Zr), zinc (Zn), silicium (Si), yttrium (Y), niobium (Nb), gallium (Ga), étain (Sn), molybdène (Mo), tungstène (W), baryum (Ba), lanthane (La), cérium (Ce), argent (Ag), tantale (Ta), hafnium (Hf), ruthénium (Ru), bismuth (Bi), antimoine (Sb), et arsenic (As).

**3.** Composite selon la revendication 1 ou 2, dans lequel un rapport atomique lithium/titane dans le composite est d'environ 0,6 à environ 1,8.

**4.** Composite selon l'une quelconque des revendications 1 à 3, dans lequel l'oxyde de titane de lithium est $Li_4Ti_5O_{12}$ et l'oxyde de titane en phase bronze est $TiO_2$.

**5.** Composite selon l'une quelconque des revendications 1 à 4, dans lequel un rapport d'une intensité d'un pic principal de l'oxyde de titane en phase bronze ($TiO_2$-B) à une intensité d'un pic principal de l'oxyde de titane de lithium est d'environ 0,03 à environ 2 dans un spectre de diffraction des rayons X du composite.

**6.** Procédé de fabrication d'un composite comprenant un oxyde de titane de lithium et un oxyde de titane en phase bronze selon la revendication 1, le procédé comprenant les étapes consistant à :

fournir un oxyde de titane de lithium ;
fournir un oxyde de titane en phase bronze ;
mélanger l'oxyde de titane de lithium et l'oxyde de titane en phase bronze ; et
soumettre le mélange à un traitement thermique.

**7.** Procédé selon la revendication 6, dans lequel le traitement thermique est effectué entre environ 250 °C et environ 450 °C sous une atmosphère de gaz inerte ou une atmosphère de gaz oxydant.

**8.** Procédé selon l'une quelconque des revendications 6 à 7, dans lequel la fourniture de l'oxyde de titane en phase bronze comprend les étapes consistant à :

effectuer une réaction de substitution d'ion hydrogène sur le titanate de sodium pour obtenir du titanate d'hydrogène ; et
soumettre le titanate d'hydrogène à un traitement thermique sous une atmosphère d'air ou une atmosphère d'oxygène.

**9.** Matériau actif d'électrode négative comprenant le composite selon l'une quelconque des revendications 1 à 5.

**10.** Électrode négative comprenant le matériau actif d'électrode négative selon la revendication 9.

**11.** Batterie secondaire au lithium comprenant l'électrode négative selon la revendication 10.

FIG. 1A

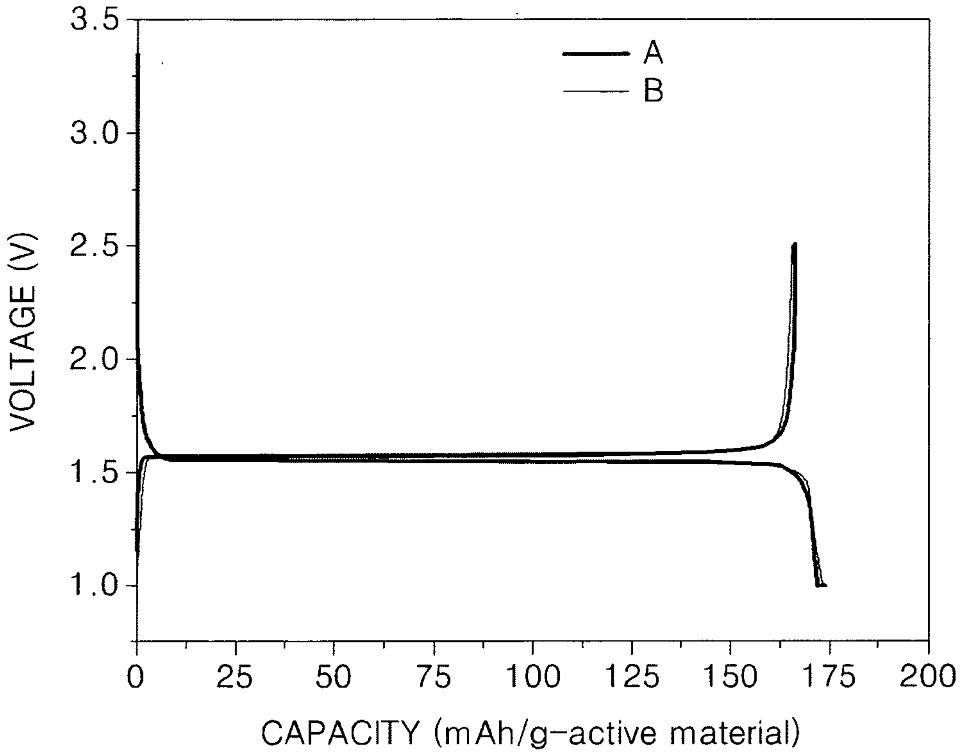
A
B
3.5
3.0
2.5
2.0
1.5
1.0
VOLTAGE (V)
0
25
50
75
100
125
150
175
200
CAPACITY (mAh/g-active material)

FIG. 1B

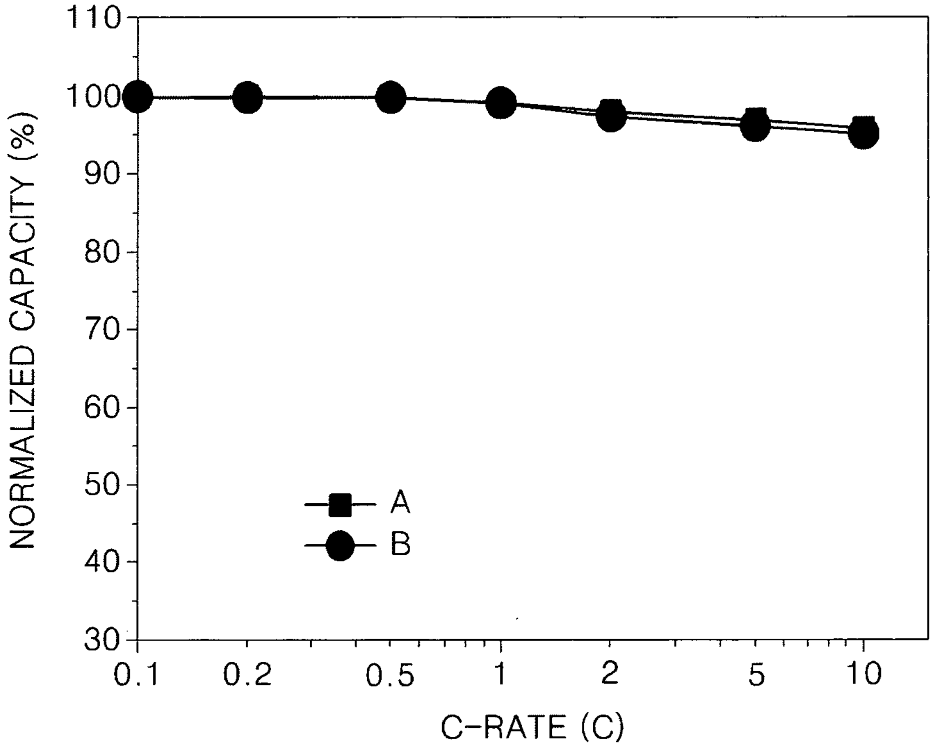
110
100
90
80
70
60
50
40
30
NORMALIZED CAPACITY (%)
A
B
0.1
0.2
0.5
1
2
5
10
C-RATE (C)

FIG. 1C

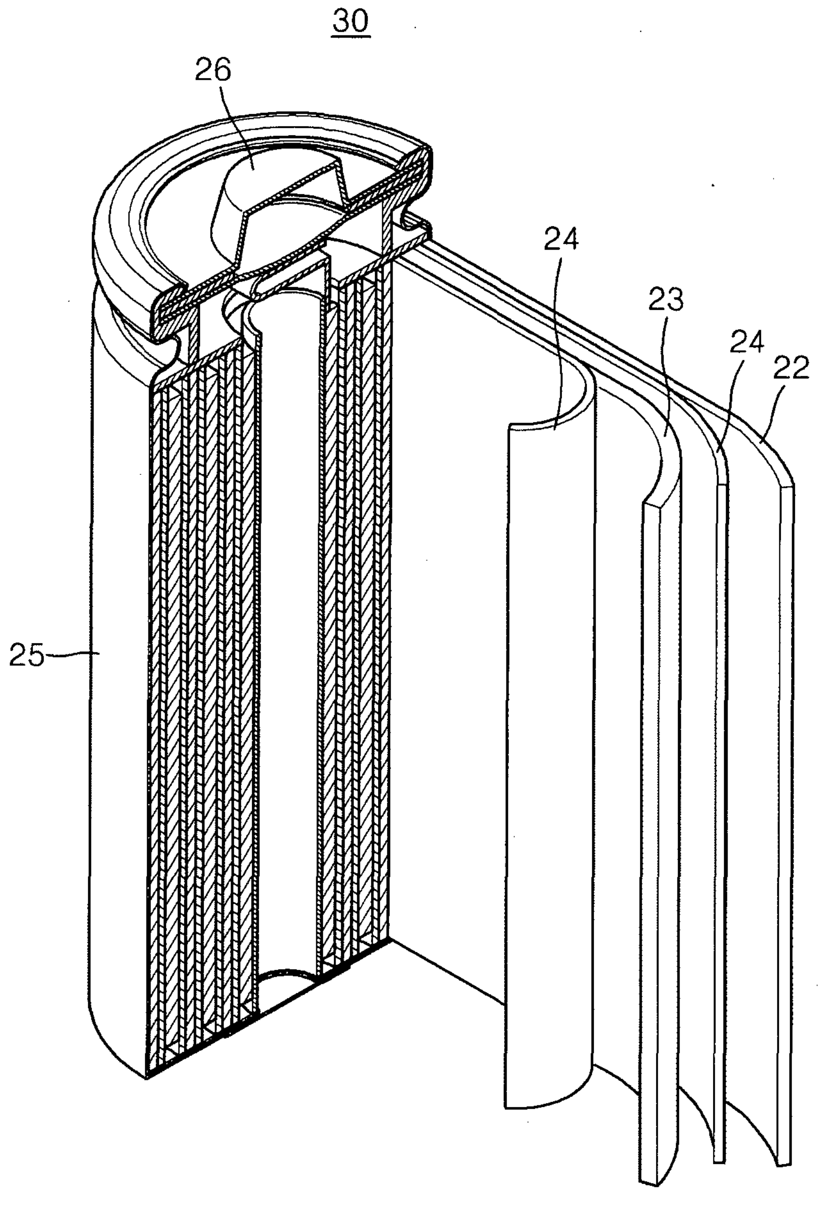

FIG. 1D

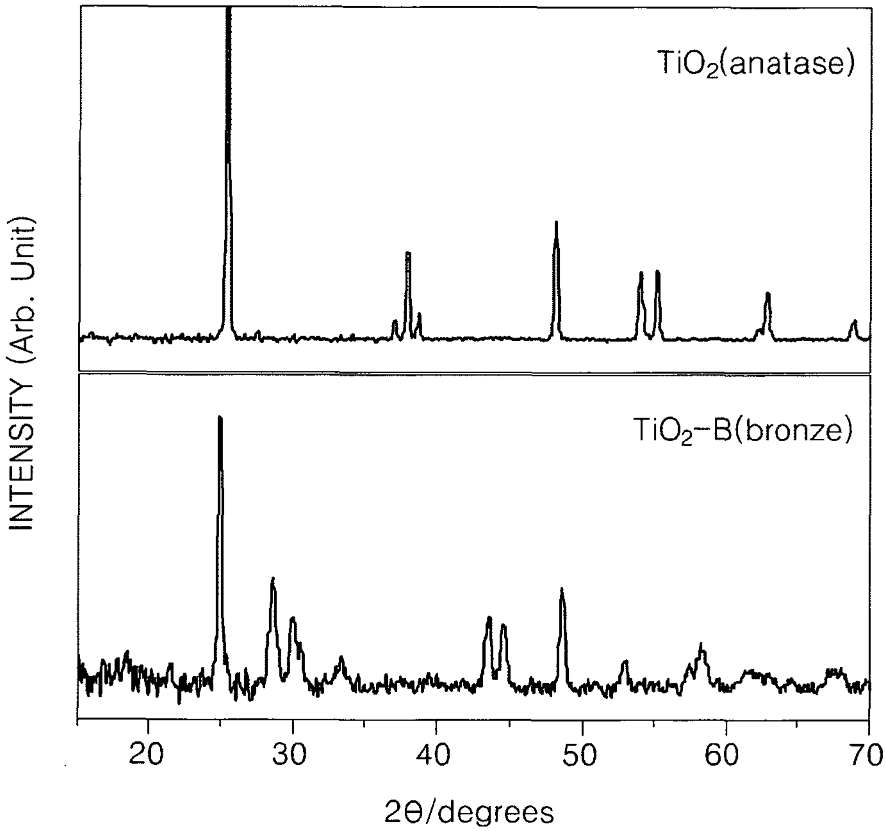
TiO2(anatase)
TiO2-B(bronze)
INTENSITY (Arb. Unit)
20
30
40
50
60
70
2θ/degrees

FIG. 2

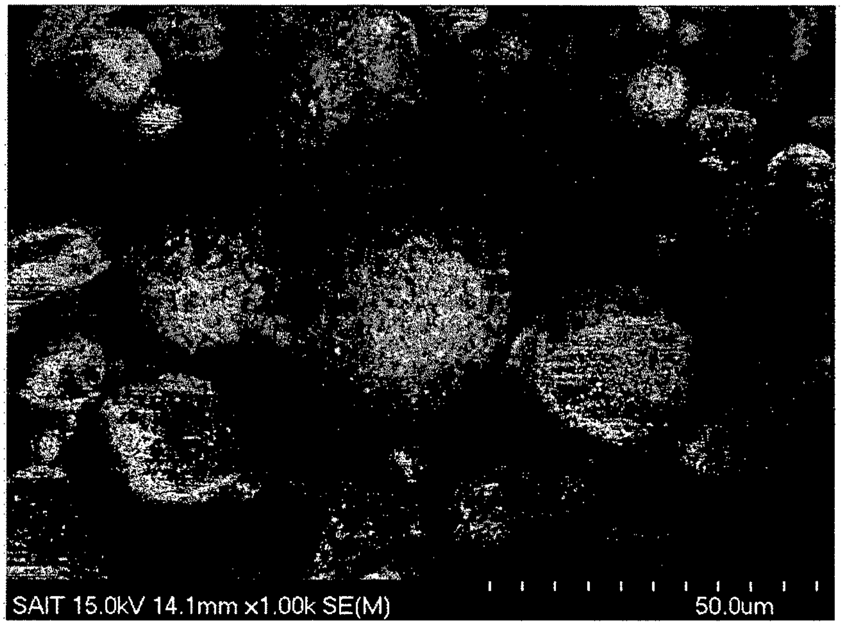


FIG. 3

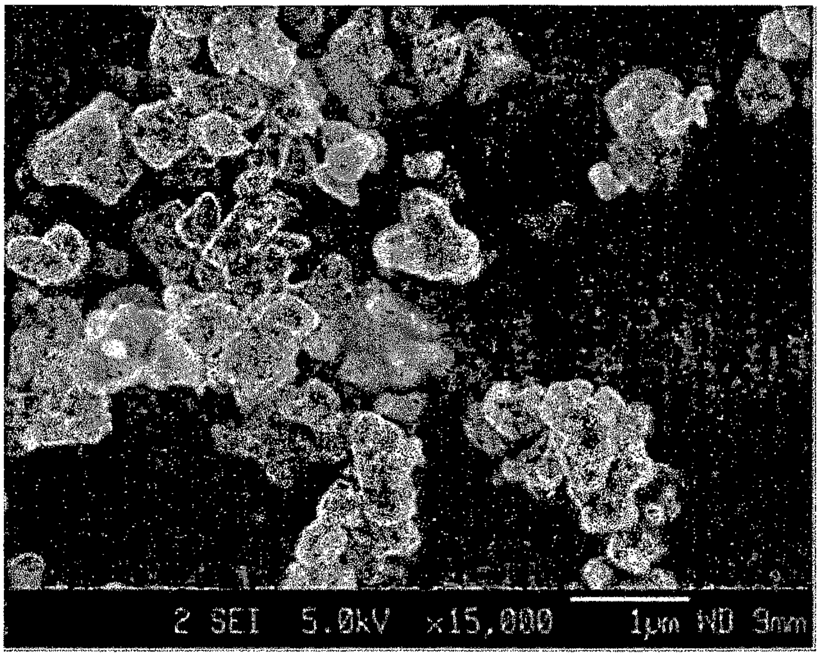

FIG. 4

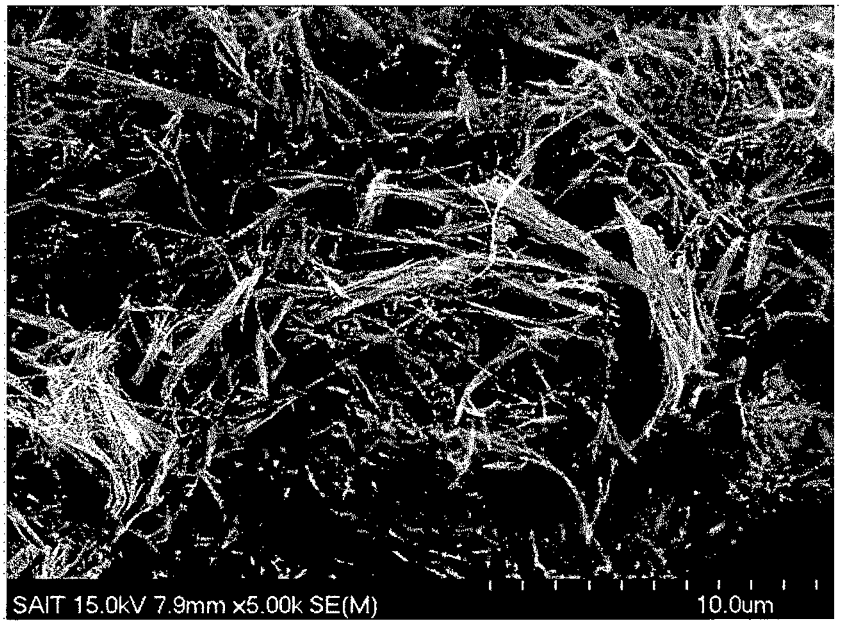
SAIT 15.0kV 7.9mm x5.00k SE(M)
10.0um

FIG. 5

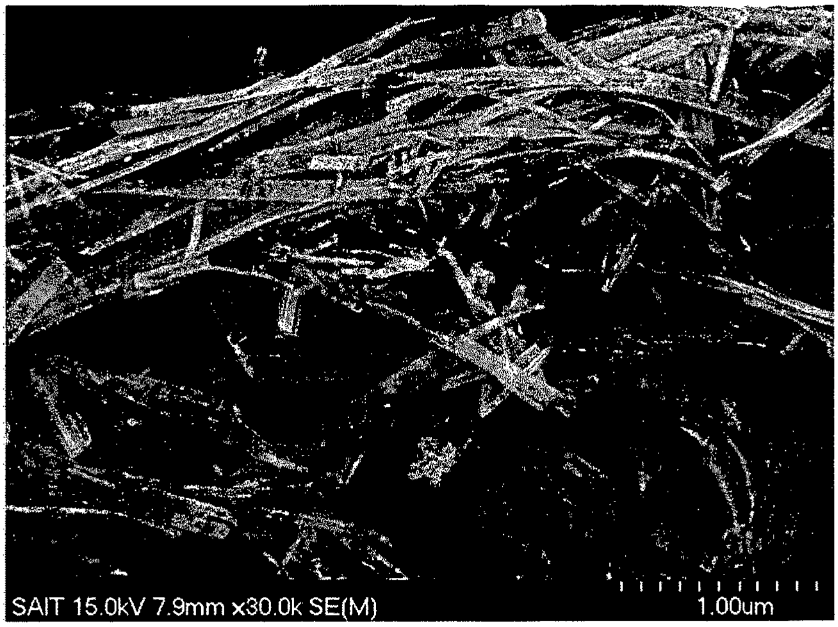
SAIT 15.0kV 7.9mm x30.0k SE(M)
1.00um

FIG. 6

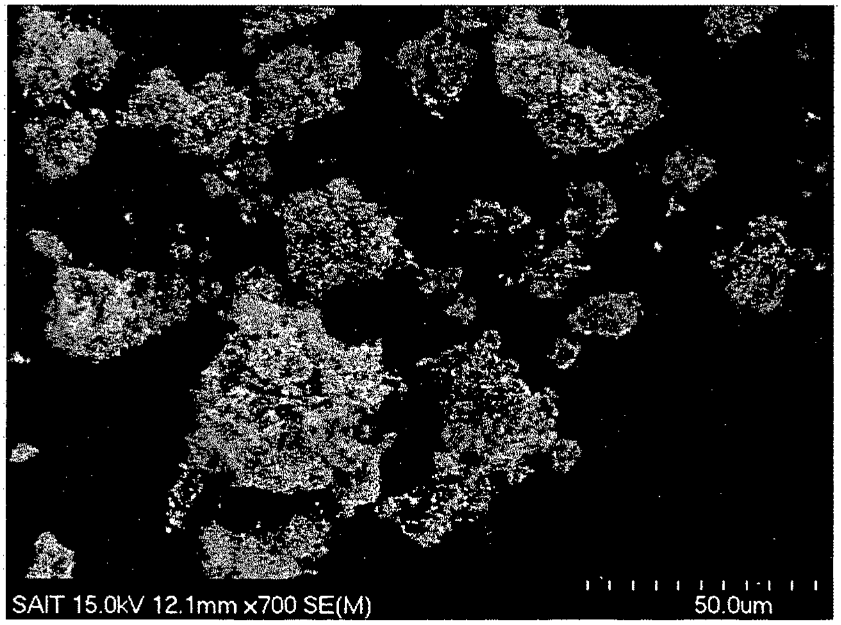
SAIT 15.0kV 12.1mm x700 SE(M)
50.0um

FIG. 7

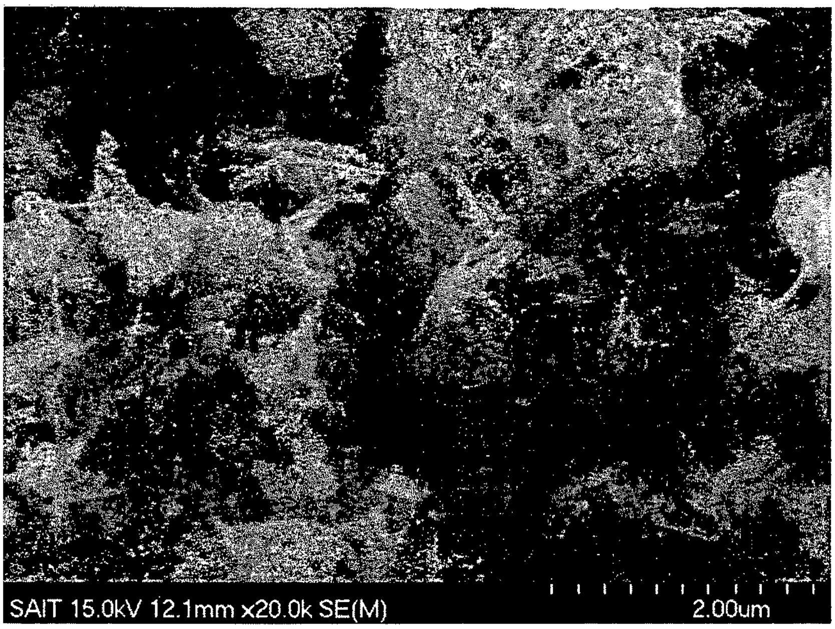
SAIT 15.0kV 12.1mm x20.0k SE(M)
2.00um

FIG. 8

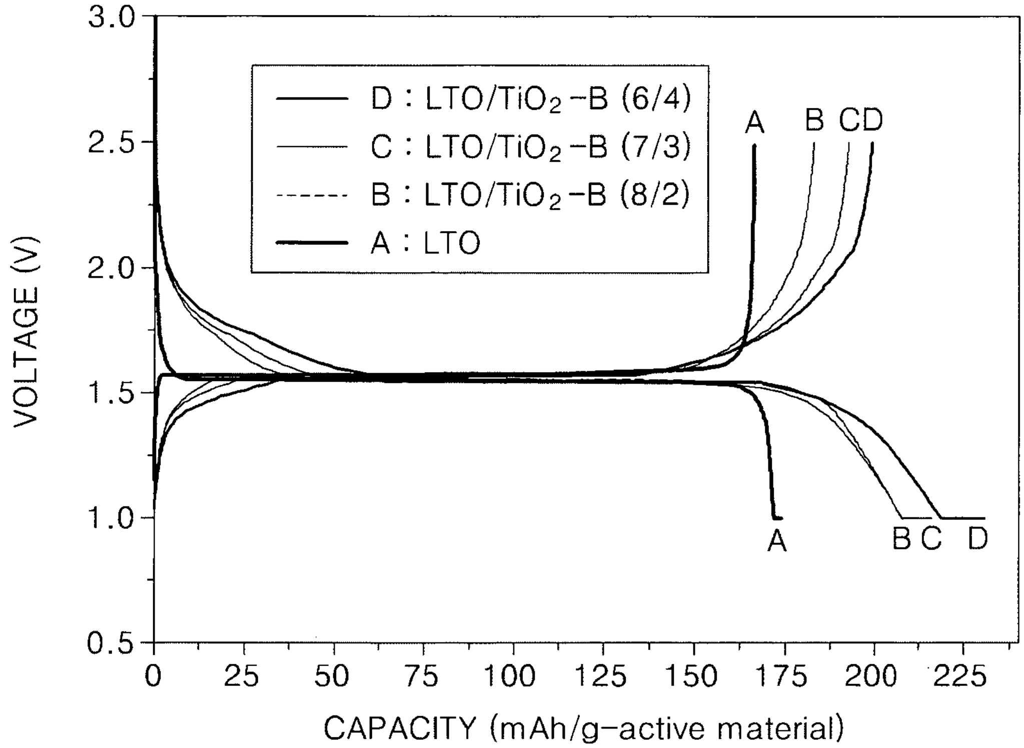
D : LTO/TiO2-B (6/4)
C : LTO/TiO2-B (7/3)
B : LTO/TiO2-B (8/2)
A : LTO
A B CD
A B C D
VOLTAGE (V)
3.0
2.5
2.0
1.5
1.0
0.5
0
25
50
75
100
125
150
175
200
225
CAPACITY (mAh/g-active material)

FIG. 9A

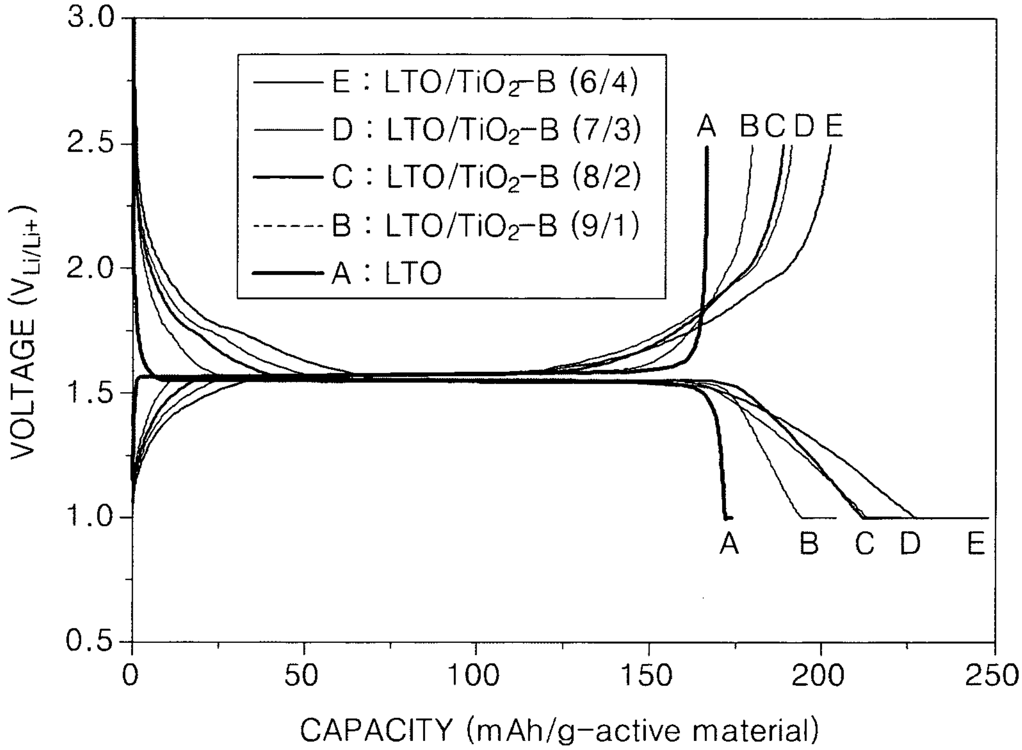
E : LTO/TiO2-B (6/4)
D : LTO/TiO2-B (7/3)
C : LTO/TiO2-B (8/2)
B : LTO/TiO2-B (9/1)
A : LTO
A BCDE
A B C D E
VOLTAGE (VLi/Li+)
CAPACITY (mAh/g-active material)
3.0
2.5
2.0
1.5
1.0
0.5
0
50
100
150
200
250

FIG. 9B

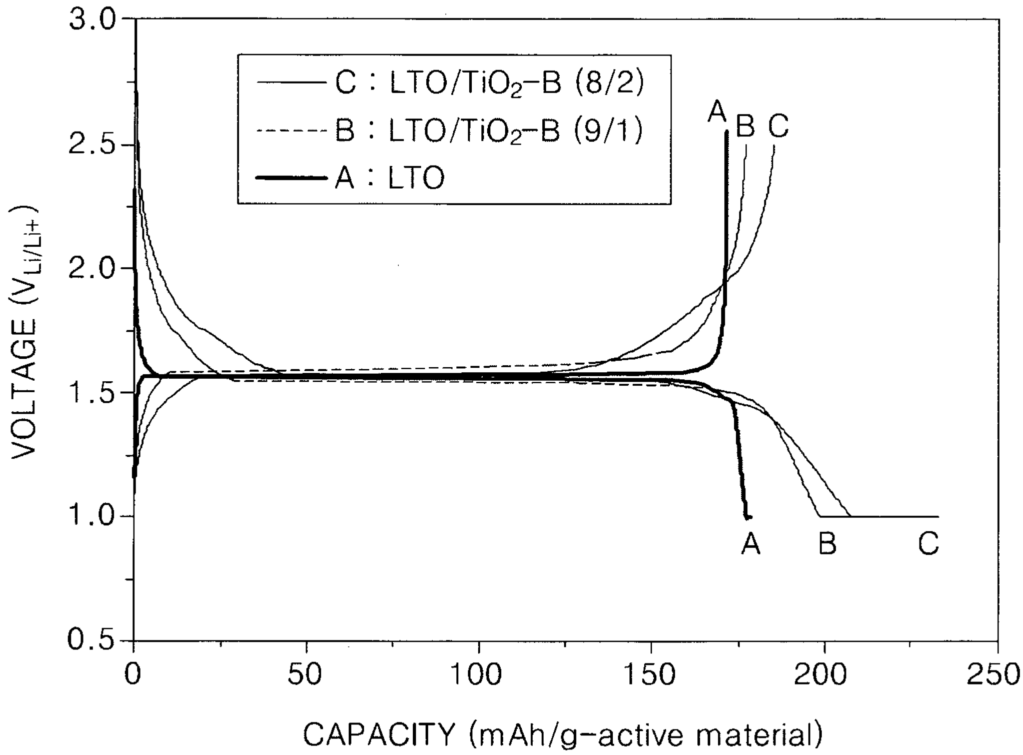
C : LTO/TiO2-B (8/2)
B : LTO/TiO2-B (9/1)
A : LTO
A B C
A B C
VOLTAGE (VLi/Li+)
CAPACITY (mAh/g-active material)
3.0
2.5
2.0
1.5
1.0
0.5
0
50
100
150
200
250

FIG. 10

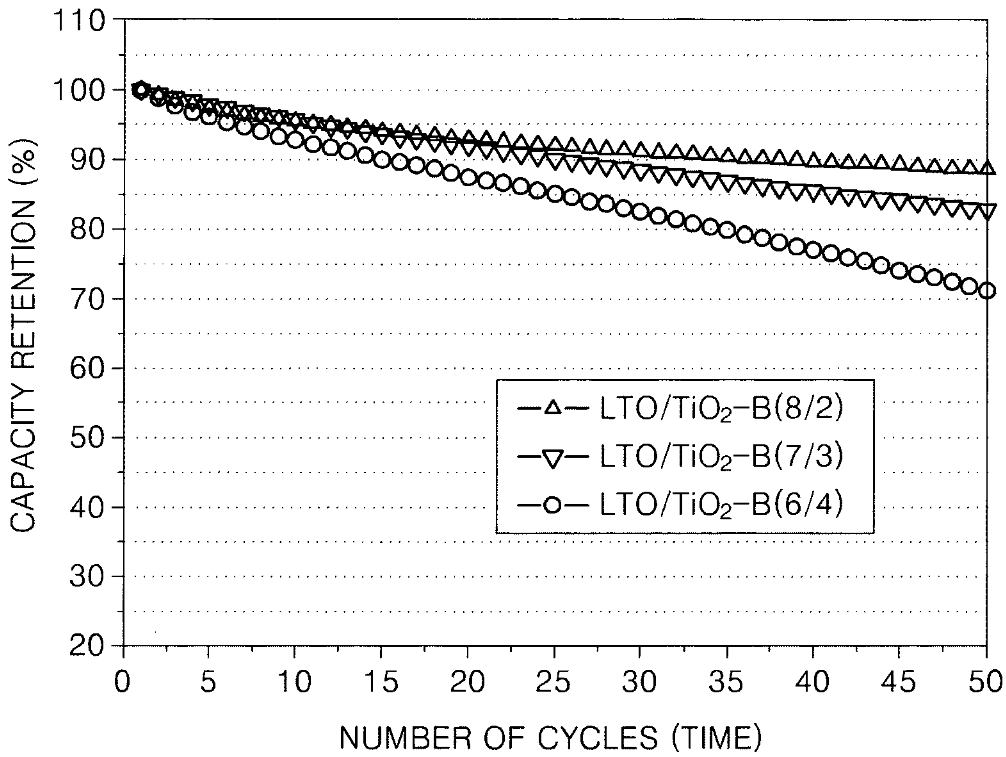
110
100
90
80
70
60
50
40
30
20
CAPACITY RETENTION (%)
0
5
10
15
20
25
30
35
40
45
50
NUMBER OF CYCLES (TIME)
LTO/TiO2-B(8/2)
LTO/TiO2-B(7/3)
LTO/TiO2-B(6/4)

FIG. 11

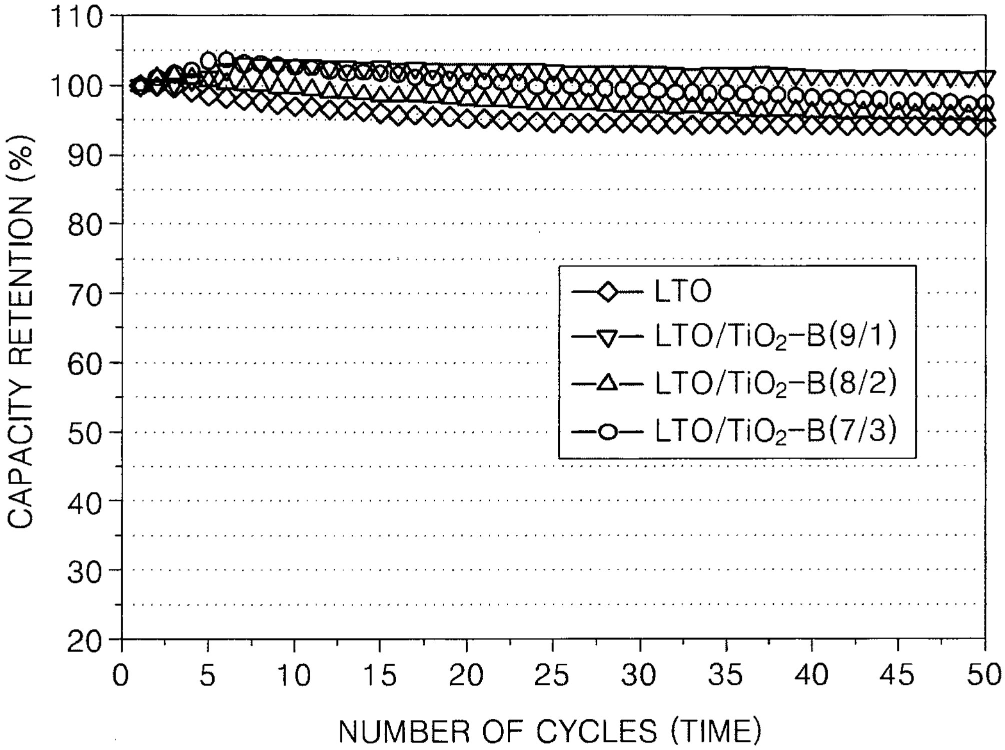
110
100
90
80
70
60
50
40
30
20
CAPACITY RETENTION (%)
0
5
10
15
20
25
30
35
40
45
50
NUMBER OF CYCLES (TIME)
LTO
LTO/TiO2-B(9/1)
LTO/TiO2-B(8/2)
LTO/TiO2-B(7/3)

FIG. 12

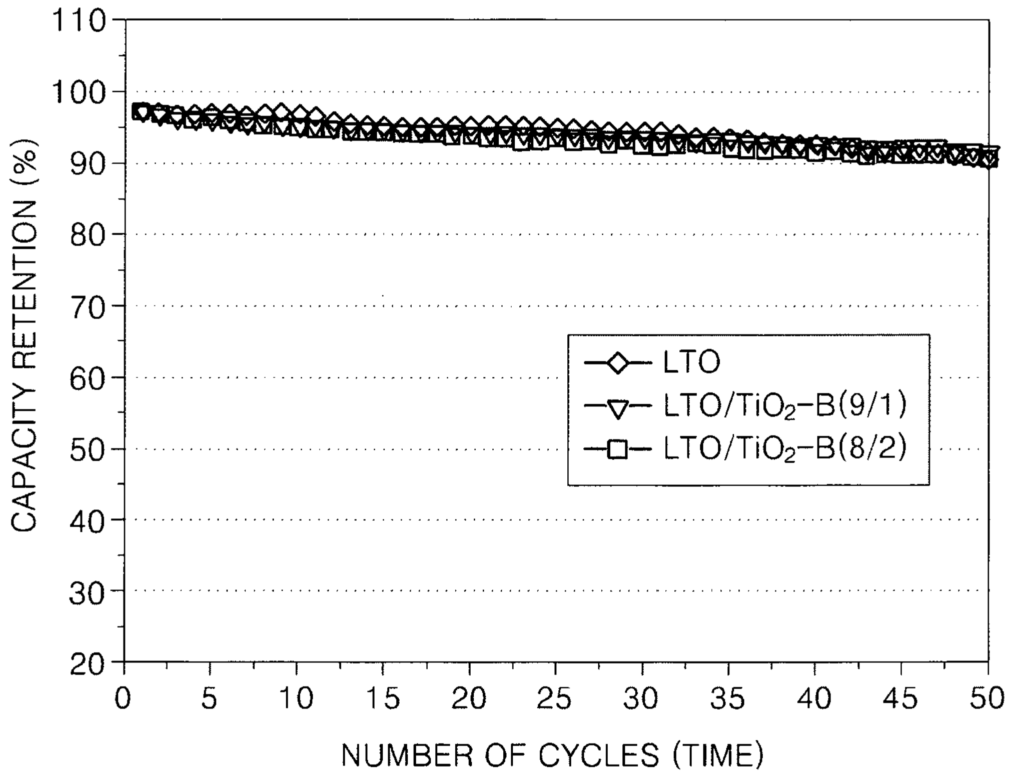
110
100
90
80
70
60
50
40
30
20
CAPACITY RETENTION (%)
0
5
10
15
20
25
30
35
40
45
50
NUMBER OF CYCLES (TIME)
LTO
LTO/TiO2-B(9/1)
LTO/TiO2-B(8/2)